# EUROPÄISCHE PATENTSCHRIFT

(11) **EP 2 561 331 B1**
(45) Veröffentlichungstag und Bekanntmachung des Hinweises auf die Patenterteilung: **14.05.2014**
(21) Anmeldenummer: 11714747.0
(22) Anmeldetag: 12.04.2011
(51) Int. Cl.: G01M 17/007

(54) **PRÜFRAD-ANORDNUNG**
TEST WHEEL ARRANGEMENT
ARRANGEMENT DE ROUE D'ESSAI

(30) Priorität: 22.04.2010 DE 102010016587
(43) Veröffentlichungstag der Anmeldung: 27.02.2013
(73) Patentinhaber: Ipetronik GmbH & Co. KG, 76532 Baden-Baden (DE)
(72) Erfinder: INHOFF, Andreas, 76479 Steinmauern (DE); HESSE, Ullrich, 71563 Affalterbach (DE); ZIPP, Walter, 76532 Baden-Baden (DE)
(74) Vertreter: Popp, Eugen
(86) Internationale Anmeldenummer: PCT/EP2011/055707
(87) Internationale Veröffentlichungsnummer: WO 2011/131514

(56) Entgegenhaltungen:
- EP-A2- 2 187 193
- DE-A1- 3 507 906
- DE-A1- 4 136 508
- DE-A1-102008 006 870

## Beschreibung

Die Erfindung betrifft eine Prüfrad-Anordnung gemäß dem Oberbegriff des Anspruchs 1.

Aus dem Stand der Technik sind Prüfstände zur Fahrzeugerprobung bekannt, die als Ergänzung zum Testbetrieb auf der Straße zahlreiche Vorteile bieten.

Neben der Unabhängigkeit vom Wetter erlaubt der Prüfstandsbetrieb die Installation von messtechnischen Vorrichtungen am Fahrzeug, die aufgrund ihrer Größe, ihres Gewichts oder einer aufwändigen Verdrahtung für die Straßenfahrt untauglich sind. Ein weiterer Vorteil derartiger Prüfstände ist die Reproduzierbarkeit des Testbetriebs, die auf dem Prüfstand mit höherer Genauigkeit gewährleistet werden kann als bei der Straßenfahrt. Durch die Prüfstände der hier angesprochenen Art ist es möglich, verschiedene Fahrzyklen eines Kraftfahrzeugs zu simulieren und die Gesamteigenschaften des Fahrzeugs zu vermessen. Insbesondere können die durch den Antriebsstrang wie Getriebe, Antriebswelle oder Lager verursachten Geräusche vermessen werden. Weiterhin kann die Längsdynamik eines Fahrzeugs, also insbesondere der Antrieb, die Bremsen, der Fahrwiderstand und der Verbrauch etc. oder auch die Querdynamik, d.h. insbesondere das Lenken, Kurvenfahrten, die Kippsicherheit etc. erfasst werden. Auch die Beschleunigung in bzw. um die Achsen eines Kraftfahrzeugs kann erfasst werden. Insgesamt ermöglichen Prüfstände somit eine umfassende Erfassung fahrzeugspezifischer Eigenschaften, die hier nicht abschließend dargestellt sind.

Üblicherweise nutzen Prüfstände der bekannten Art zur Fahrzeugerprobung das Grundprinzip einer bewegten Fahrbahn. Hierfür sind bei den so genannten Rollenprüfständen meist große Rollen vorgesehen, die im Stockwerk unterhalb des Testraums für das Fahrzeug installiert sind. Bei einem Prüfstand kann jedoch auch das so genannte Flachbahnkonzept zum Einsatz kommen, bei dem sich ähnlich einer Bandschleifmaschine die Fahrbahn unter dem Fahrzeug hinwegbewegt. Nachteilig an den Prüfständen oder oben beschriebenen Art ist es, dass diese neben einem erheblichen baulichen Aufwand eine sichere und robuste Fixierung des Fahrzeugs auf den Rollen bzw. auf der Flachbahn erfordern. Die Fixierung des Fahrzeugs auf dem Prüfstand erzeugt jedoch eine Verspannung der Karosserie sowie eine Verspannung von Fahrwerkskomponenten, die das Schwing- und Übertragungsverhalten des Fahrzeugs beeinflussen, wodurch die Testergebnisse verfälscht werden. Ein weiterer Nachteil ergibt sich hinsichtlich einer Erprobung der Fahrzeugakustik zur Bestimmung von Schallemissionen eines Fahrzeugs. Die Reibpaarung zwischen den Reifen eines zu erprobenden Fahrzeugs und dem Prüfstandsbelag erzeugt nämlich ein anderes Rollgeräusch, als es bei der Straßenfahrt der Fall ist, so dass es durch den Roll- oder Flachbahnprüfstand zu erheblichen Abweichungen in der Fahrzeugakustik verglichen mit dem typischen Straßenbetrieb kommen kann.

Die DE 35 07 906 A1, DE 41 36 508 A1, DE 10 2008 006 870 A1 und EP 2 187 193 A21 zeigen jeweils eine gattungsgemäße Prüfrad-Anordnung zur Erprobung eines Kraftfahrzeugs bei stillstehenden Reifen.

Aufgabe der vorliegenden Erfindung ist es, eine Prüfrad-Anordnung zu schaffen, die mit nur geringem baulichen Aufwand sämtliche Anwendungsfälle eines herkömmlichen Rollen- und/oder Flachbahnprüfstands unterstützt, welche die Verfälschung der erfassten Fahrzeugakustik durch den Prüfstandsbelag vermeidet, und welche darüber hinaus einen vereinfachten Transport des Fahrzeugs in den Prüfstand bietet.

Zur Lösung der oben genannten Aufgabe wird eine Prüfrad-Anordnung mit den Merkmalen des Anspruchs 1 vorgeschlagen. Die erfindungsgemäße Prüfrad-Anordnung zur Erprobung eines Kraftfahrzeugs bei stillstehenden Reifen weist einen an einer Radnabe eines Kraftfahrzeugs anschließbaren Wellenabschnitt auf, auf dem ein Prüfrad frei drehbar gelagert ist, sowie eine Einrichtung zur Verblockung der Drehlagerung zwischen dem Prüfrad und dem Wellenabschnitt. Die Prüfrad-Anordnung zeichnet sich dadurch aus, dass die Einrichtung zur Verblockung der Drehlagerung zwischen dem Prüfrad und dem Wellenabschnitt ein elastisches Zwischenelement und einen vorzugsweise dreiarmigen Flansch aufweist, wobei das elastische Zwischenelement drehfest mit dem Prüfrad verbunden ist, und wobei der Flansch einerseits mit dem elastischen Zwischenelement und andererseits mit dem Wellenabschnitt drehfest verbunden ist.

Ein wesentlicher Punkt der Erfindung liegt also darin, eine Prüfrad-Anordnung speziell zur Fahrzeugerprobung zu schaffen, die ein Prüfrad und einen Wellenabschnittdrehbeweglich miteinander vereint, sodass während eines Testbetriebs das Prüfrad eines zu erprobenden Fahrzeugs stillsteht und sich ausschließlich der Wellenabschnitt - angetrieben durch geeignete Antriebsmittel - dreht. Besonders vorteilhaft ist es, dass durch das Stillstehen der Prüfräder die üblicherweise durch den Prüfstandsbelag -resultierenden Rollgeräusche entfallen. Die erfindungsgemäße Prüfrad-Anordnung kann einfach außerhalb des Prüfstands an der Stelle der normalen Räder an das Fahrzeug montiert werden. Anschließend kann der Wellenabschnitt der Prüfrad-Anordnung durch geeignete Antriebsmittel angetrieben werden, so dass das Fahrzeug in den typischen Zyklen eines Rollenprüfstandes antreibbar ist, wobei entgegen den bekannten Rollenprüfständen die Prüfräder des Fahrzeugs stillstehen und sich nur der an der Radnabe befestigte Wellenabschnitt dreht. Insbesondere ist es durch den Radsatz möglich, einen Bremsbetrieb und einen Schleppbetrieb mit definierter Last bei veränderlicher Motordrehzahl und Fahrgeschwindigkeit zu simulieren. Durch die Erfindung ist es weiterhin möglich, ein Kraftfahrzeug außerhalb eines Prüfbereichs mit der Prüfrad-Anordnung zu versehen und das Kraftfahrzeug erst nach der Montage der Prüfrad-Anordnung in den Prüfbereich zu fahren. Auf diese Weise ist es darüber hinaus möglich, bereits vor dem Testbetrieb mehrere Fahrzeuge mit den erfindungsgemäßen Prüfrad-Anordnungen zu versehen, so dass die Abfertigung mehrerer Fahrzeuge in einem Prüfbereich beschleunigt erfolgen kann.

Das elastische Zwischenelement ist vorzugsweise konzentrisch zu dem Wellenabschnitt angeordnet und sorgt für den Ausgleich von Fluchtfehlern, vermeidet eine Doppelzentrierung und dämpft Stöße. Vorzugsweise ist das elastische Zwischenelement als Hardyscheibe ausgebildet.

Besonders vorteilhaft ist es, wenn das Prüfrad unabhängig von der Montage des Wellenabschnitts an der Radnabe auf diesem (Wellenabschnitt) montierbar ist. Der Wellenabschnitt kann folglich vorzugweise an der Radnabe gesondert vom Prüfrad montiert werden, so dass also erst nach der Montage des Wellenabschnitts an der Radnabe das Prüfrad auf dem Wellenabschnitt montierbar ist. Der zweistufige Montageprozess der Prüfrad-Anordnung ermöglicht einen wesentlich flexibleren Einsatz der Prüfrad-Anordnung, da nur der Wellenabschnitt zur Montage an die Radnabe eines bestimmten Fahrzeugtyps angepasst werden muss, während ein und dasselbe Prüfrad für viele verschiedene Fahrzeugtypen zum Einsatz kommen kann. Ein Prüfrad ist folglich für nahezu jeden Fahrzeugtyp verwendbar, während der Wellenabschnitt fahrzeugspezifisch einsetzbar ist. Entsprechend einem herkömmlichen Rollen- oder Flachbahnprüfstand, kann ein Prüfrad gemäß der vorliegenden Erfindung folglich für verschiedene Fahrzeugtypen zum Einsatz kommen, während gleichzeitig unerwünschte Rollbahngeräusche vermieden werden.

Der flexible Einsatz der Prüfrad-Anordnung ist insbesondere dadurch realisierbar, dass der Wellenabschnitt Teil eines an der Radnabe anschließbaren Adapters ist, der vorzugsweise eine Adapterscheibe oder dergleichen Adapterelement aufweist. Der Adapter kann dann insbesondere hinsichtlich der Lochkreiszahl der Radnabe an nahezu jedes beliebige Kraftfahrzeug angepasst sein. Sofern ein Prüfrad für einen bestimmten Fahrzeugtyp eingesetzt werden soll, muss also lediglich ein entsprechender, einen Wellenabschnitt aufweisender Adapter vorgesehen sein, der mit der Radnabe des jeweiligen Kraftfahrzeugs verbunden wird, so dass anschließend eine problemlose Montage des Prüfrads auf dem Wellenabschnitt erfolgen kann.

An dem Wellenabschnitt ist vorzugsweise eine Antriebswelle, insbesondere eine flexible Antriebswelle oder eine Kreuzgelenkwelle anschließbar, derart, dass eine Drehverbindung herstellbar ist. Die Drehverbindung wird vorzugsweise zwischen dem Wellenabschnitt und einer externen Antriebseinheit und/oder einer Bremsvorrichtung erzeugt, die zum Durchführen eines Prüfbetriebs der Prüfrad-Anordnung den Wellenabschnitt in Drehbewegung versetzen oder diese abbremsen kann.

Der Wellenabschnitt ist vorzugsweise mit dem Prüfrad über ein Wälzlager, insbesondere über ein Kugellager verbunden. Es versteht sich, dass eine frei drehbare Lagerung zwischen dem Wellenabschnitt und dem Prüfrad auch über ein Gleitlager oder dergleichen geeignetes Lager erfolgen kann. Das Wälzlager ist vorzugsweise in einem die Radscheibe des Prüfrads zumindest teilweise ersetzenden Radscheibeneinsatz angeordnet. Der Radscheibeneinsatz kann mehrteilig ausgebildet sein und der Durchmesser des Wälzlagers ist unabhängig vom Durchmesser der Radnabe innerhalb des Radscheibeneinsatzes vorzugsweise frei wählbar. Der Freiheitsgrad bei der Lagerdimensionierung wird erst durch den unabhängig von dem Prüfrad montierbaren Wellenabschnitt möglich, weil in der Radscheibe bzw. in dem Radscheibeneinsatz keine Öffnungen zur Montage des Wellenabschnitts bzw. des Adapters an der Radnabe vorgesehen sein müssen. Dadurch können die Lagermaße etwa hinsichtlich des Testbetriebs, der Stabilität des Prüfrads etc. optimal gewählt werden.

Der Radscheibeneinsatz weist vorzugsweise eine Lagerhülse auf, deren Innendurchmesser an den Durchmesser des Wellenabschnitts derart angepasst ist, dass eine Spielpassung erzeugt wird. Hierzu ist vorzugsweise vorgesehen, dass der Wellenabschnitt in Richtung seiner Längsmittelachse abschnittsweise unterschiedliche Durchmesser aufweist, die ein Verkanten des Wellenabschnitts in der Lagerhülse vermeiden. Da die Montage des Wellenabschnitts wie gesagt unabhängig von der Montage des Prüfrads auf dem Wellenabschnitt erfolgt, ist es entscheidend, dass das Prüfrad problemlos auf dem Wellenabschnitt montierbar und demontierbar ist, was durch den Einsatz einer Spielpassung begünstigt wird.

Die Prüfrad-Anordnung kann eine elektrisch oder hydraulisch ausgebildete integrierte Antriebseinheit umfassen, die alternativ oder auch zusätzlich zu der externen Antriebseinheit vorgesehen sein kann. Die Antriebseinheit, sofern sie elektrisch ausgebildet ist, weist ein radial innenliegendes und ein radial außenliegendes Element auf, wobei das radial innenliegende Element dem Wellenabschnitt, dem Adapter oder auch der Radnabe zugeordnet ist, während das radial außenliegende Element mit dem Prüfrad verbunden ist. Wahlweise kann je nach gewünschtem Betrieb der internen Antriebseinheit entweder das radial innenliegende oder das radial außenliegende Element als Rotor fungieren. Sofern das radial außenliegende Element als Rotor zum Einsatz kommt, bildet die interne Antriebseinheit quasi einen Radnabenmotor. Wenn hingegen das radial innenliegende Element als Rotor eingesetzt wird, kann die Antriebseinheit einen Testbetrieb durchführen, indem der Rotor die Fahrzeugachse antreibt und/oder es wird im Generatorbetrieb Energie über das außenliegende Element, beispielsweise in die Batterie zurückgespeist.

Weiterhin kann vorgesehen sein, dass die Prüfrad-Anordnung über eine schaltbare Kupplung mit der Antriebswelle des Kraftfahrzeugs verbunden ist. Hierdurch ist es beispielsweise möglich, dass das Fahrzeug im Fahrbetrieb durch die Antriebswelle angetrieben wird oder die interne Antriebseinheit als Generator benutzt wird, indem das radial innenliegende Element über den laufenden Verbrennungsmotor über die Antriebswelle in Drehbewegung versetzt wird.

Die Prüfrad-Anordnung gemäß der vorliegenden Erfindung dient speziell zur Fahrzeugerprobung. Sie vereint einen Wellenabschnitt und ein dazu koaxial angeordnetes Prüfrad drehbeweglich miteinander, so dass während eines Testbetriebs das Prüfrad eines zu erprobenden Fahrzeugs stillsteht und sich ausschließlich der Wellenabschnitt - angetrieben durch geeignete Antriebsmittel - dreht. Üblicherweise werden mindestens einer Fahrzeugachse jeweils zwei Prüfrad-Anordnungen zugeordnet. Das heißt also, dass die beiden einer Achse zugeordneten normalen Räder durch erfindungsgemäße Prüfrad-Anordnungen ersetzt werden. Durch die vorliegende Erfindung ist es auch möglich, einen herkömmlichen Rollen- oder Flachbahnprüfstand für ein Kraftfahrzeug mit einer einzigen angetriebenen Achse (Front- oder Heckantrieb) zur Verwendung für ein Kraftfahrzeug mit zwei angetriebenen Achsen (Vierradantrieb) aufzurüsten, indem eine Achse des Fahrzeugs mit dem herkömmlichen Prüfstand und die andere Achse mit zwei Prüfrad-Anordnungen gemäß der Erfindung zusammenwirkt.

Der Wellenabschnitt der Prüfrad-Anordnung kann durch geeignete Antriebsmittel in eine Drehbewegung versetzt werden, so dass das Fahrzeug in den typischen Zyklen eines Rollenprüfstands antreibbar ist, wobei die Räder des Fahrzeugs stillstehen und sich nur der mit der Radnabe verbundene Wellenabschnitt dreht. Insbesondere ist es durch die Prüfrad-Anordnung möglich, einen Bremsbetrieb und einen Schleppbetrieb mit definierter Last bei veränderlicher Motordrehzahl und Fahrgeschwindigkeit zu simulieren. Es versteht sich, dass zur vollständigen Überprüfung eines Kraftfahrzeugs vorzugsweise alle vier Räder im Falle eines PKW durch die Prüfrad-Anordnung der hier vorgeschlagenen Art ersetzt werden können.

Durch die Prüfrad-Anordnung gemäß der Erfindung ist es darüber hinaus möglich, Lenkbewegungen zu simulieren. Die Lenkbewegungen werden durch geeignete Verbindungswellen zu den Antriebswellen ausgeglichen und können daher kein Durchrutschen von Reifen auf einer Fahrbahn verursachen. Da eine Fixierung des Fahrzeugs am Boden entfällt, wird keine Verspannung in der Fahrzeugstruktur verursacht, so dass sich auch das Schwing- und Übertragungsverhalten des Fahrzeugs nicht ändert. Ein möglicherweise verändertes Gewichts- und Rotationsmassenträgheitsmoment der mehrteiligen Prüfrad-Anordnung kann durch eine geringe Masse des äußeren Felgenbereichs und des Reifens kompensiert werden. Durch die drehbare Verbindung zwischen dem Prüfrad und dem Wellenabschnitt, die wie gesagt vorzugsweise mittels eines (Wälz-)Lagers erzeugt wird, wird eine auffällige Geräuschbildung zwischen den einzelnen Teilen der Prüfrad-Anordnung vermieden. Darüber hinaus entfällt das übliche Abrollgeräusch der Reifen auf der Straße oder den Rollen eines Prüfstands. Dieses kann jedoch zur Erzielung der vollständigen Authentizität der akustischen Verhältnisse einer Straßenfahrt auf elektronischem Wege einfach hinzugefügt werden. Insbesondere zeigt sich somit, dass Geräuschkomponenten, die auch bei einer Straßenfahrt nicht auftreten, im Prüfstandsbetrieb mit der erfindungsgemäßen Prüfrad-Anordnung in vorteilhafter Weise nicht angeregt werden, so dass sich bereits hierdurch ein erheblicher Vorteil gegenüber herkömmlichen Prüfständen ergibt.

Wie gesagt, ist der Wellenabschnitt mit dem Prüfrad vorzugsweise über einen Lager verbunden. Dabei kann das Lager als Freilauf derart ausgebildet sein, dass das Prüfrad erst dann von einer Drehbewegung des Wellenabschnitts entkoppelt wird, wenn sich die Lastverhältnisse entsprechend ändern.

Einer Prüfrad-Anordnung gemäß der Erfindung ist vorzugsweise wenigstens ein elektrischer, hydraulischer oder pneumatischer Aktuator zur Simulation einer Fahrt auf einem unebenen Gelände, d.h. zur Simulation einer "Schlechtweg-Fahrt", zugeordnet. Bei einer Ausführungsform kann vorgesehen sein, dass das Prüfrad und insbesondere die Radscheibe des Prüfrads zwei konzentrisch zueinander angeordnete Radscheibenteile aufweist und der Aktuator derart in die Prüfrad-Anordnung integriert ist, dass er eine Kraft auf wenigstens eines der beiden Teile ausüben kann, derart, dass das wenigstens eine Radscheibenteil relativ zu dem anderen Radscheibenteil verlagerbar ist. Dadurch ist eine Krafteinkopplung unmittelbar in den Wellenabschnitt möglich. Der Aktuator kann also extern mit der Prüfrad-Anordnung zusammenwirken oder in diesen integriert sein und elektrisch, hydraulisch oder pneumatisch ausgebildet sein. Denkbar ist es auch, Aktuatoren zur Simulation von "Schlechtweg-Fahrten" einzusetzen, die impulsartige Kräfte über die Aufstandsflächen der Reifen in das Fahrzeug einkoppeln. Die beschriebene Anordnung erlaubt die Schlechtwegsimulation mit regulär laufendem Triebstrang, was mit einem üblichen Rollenprüfstand wegen der Massenträgheit der Rollen nicht möglich ist. Gegenüber einem sogenannten Flachbahnprüfstand hat das beschriebene Konzept einen erheblichen Kostenvorteil.

Die Erfindung wird im Folgenden anhand der Zeichnung näher erläutert.

Es zeigen:
- Fig. 1: eine Schnittdarstellung einer Prüfrad-Anordnung gemäß der Erfindung;
- Fig. 2: einen Schnitt durch ein Adapterelement;
- Fig. 3: eine schematische Darstellung einer externen Antriebseinheit nach einer ersten Ausführungsform;
- Fig. 4: eine schematische Darstellung einer externen Antriebseinheit nach einer zweiten Ausführungsform;
- Fig. 5: eine schematische Draufsicht auf ein Fahrzeug mit vier Prüfrad-Anordnungen und damit verbundenen Antriebseinheiten;
- Fig. 6: einen Schnitt durch einen mit einem externen Aktuator zusammenwirkende Prüfrad-Anordnung;
- Fig. 7: einen Schnitt durch eine Prüfrad-Anordnung mit einem integrierten Aktuator;
- Fig. 8a: eine Draufsicht auf eine Prüfrad-Anordnung mit einem Aktuator zur Simulation des Lenkradwiderstandsmoments;
- Fig. 8b: eine schematische Schnittdarstellung der Prüfrad-Anordnung gemäß Fig. 8a;
- Fig. 9: eine schematische Schnittdarstellung einer Prüfrad-Anordnung mit integrierter Antriebseinheit;
- Fig. 10: eine schematische Darstellung einer Fixierungseinrichtung zur Fixierung von zwei Prüfrad-Anordnungen gemäß der Erfindung;
- Fig. 11: eine schematische Draufsicht auf den Teil eines Prüfrads einer Prüfrad-Anordnung gemäß der Erfindung;
- Fig. 12: eine perspektivische Darstellung eines Teils des Radscheibeneinsatzes gemäß der Erfindung;
- Fig. 13: eine perspektivische Darstellung einer Lagerhülse;
- Fig. 14: eine perspektivische Darstellung eines Lagervorspannrings;
- Fig. 15: eine perspektivische Darstellung eines Adapters mit Wellenabschnitt;
- Fig. 16: eine Schnittdarstellung des Adapters gemäß Fig. 15;
- Fig. 17: eine perspektivische Darstellung eines dreiarmigen Flansches für die Einrichtung zur Verblockung der Drehlagerung zwischen dem Prüfrad und dem Wellenabschnitt;
- Fig. 18: eine perspektivische Darstellung eines Steckbolzens zur Befestigung eines elastischen Zwischenelements der Einrichtung zur Verblockung der Drehlagerung zwischen dem Prüfrad und dem Wellenabschnitt;
- Fig. 19: eine perspektivische Darstellung einer Einrichtung zur Verblockung der Drehlagerung zwischen dem Prüfrad und dem Wellenabschnitt im montierten Zustand, und
- Fig. 20: eine perspektivische Darstellung einer Prüfrad-Anordnung mit angeschlossener externer Antriebseinheit gemäß der Erfindung.

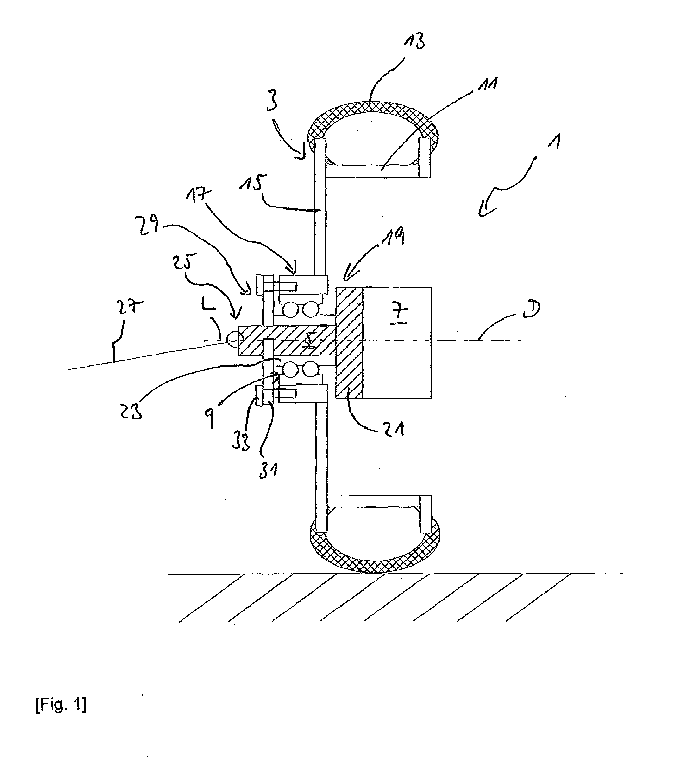

Fig. 1 zeigt eine Schnittdarstellung einer Prüfrad-Anordnung 1 gemäß der Erfindung. Die Prüfrad-Anordnung 1 ist mehrteilig ausgebildet und weist ein Prüfrad 3 und einen Wellenabschnitt 5 auf, der an der Radnabe 7 (Radnabenflansch) eines Kraftfahrzeugs anschließbar ist. Das Prüfrad 3 und der Wellenabschnitt 5 sind frei drehbar über ein Lager miteinander verbunden, wobei das Lager in dem vorliegenden Ausführungsbeispiel durch ein Wälzlager 9 und insbesondere durch ein Kugellager gebildet wird. Denkbar ist es auch, einen Freilauf als drehbare Verbindung zwischen dem Wellenabschnitt 5 und dem Prüfrad 3 vorzusehen. Durch die drehbare Verbindung zwischen dem Prüfrad 3 und dem Wellenabschnitt 5, welches mit der Radnabe 7 eines Kraftfahrzeugs verbunden ist, kann während einer Fahrzeugerprobung das Prüfrad 3 stillstehen, während der Wellenabschnitt 5 mit der Radnabe 7 zur Simulation von Fahreigenschaften gedreht wird.

Das Prüfrad 3 wird im Prinzip aus einem herkömmlichen Laufrad eines Kraftfahrzeugs hergestellt und umfasst eine Felge 11, einen Reifen 13 und eine Radscheibe 15. Zur Aufnahme eines Radscheibeneinsatzes 17, ist eine Öffnung vorgesehen, die in die Radscheibe 15 durch einen geeigneten Arbeitsvorgang, insbesondere durch Stanzen, Laserschneiden, mechanisches Schneiden oder dergleichen, einbringbar ist. Der Radscheibeneinsatz 17 ist vorzugsweise mit der Radscheibe 15 fest verbunden, insbesondere mit diesem verschweißt und dient zur Aufnahme des Wälzlagers 9.

Der Wellenabschnitt 5 ist in dem vorliegenden Ausführungsbeispiel Teil eines an der Radnabe 7 anschließbaren Adapters 19, der einen im Wesentlichen T-förmigen Querschnitt aufweist. Zur Verbindung mit der Radnabe 7, weist er, wie in der Figur dargestellt ist, vorzugsweise eine kreisförmige Adapterscheibe 21 auf. Die Adapterscheibe ist zentrisch mit einer Stirnseite des Wellenabschnitts 5 derart verbunden, dass der Wellenabschnitt 5 im Wesentlichen senkrecht von einer Stirnfläche der Adapterscheibe 21 absteht. Dadurch bildet die Längsmittelachse L des Wellenabschnitts 5 quasi eine Verlängerung der Drehachse D der Radnabe 7 und der damit verbundenen Fahrzeugachse.

Besonders vorteilhaft ist es, dass das Prüfrad 3 unabhängig von der Montage des Wellenabschnitts 5 an der Radnabe 7 auf dem Wellenabschnitt 5 montierbar und demontierbar ist. Der Adapter 19 dient dazu, die Prüfrad-Anordnung 1 mit einem beliebigen Fahrzeugtyp zu verbinden. Jeder Adapter 19 ist also mindestens einem bestimmten Fahrzeugtyp zugeordnet und entsprechend individuell ausgebildet. Zur Montage einer Prüfrad-Anordnung 1 an einem Fahrzeug wird zunächst das ursprüngliche Rad abmontiert und der Adapter 19 auf den regulären Lochkreis der Radnabe 7 des Fahrzeugs geschraubt. Hierzu weist der Adapter 19 je nach Fahrzeugtyp die entsprechenden Löcher auf, die dann also nach Größe und Anzahl an einem entsprechenden Fahrzeug angepasst sind. Für jeden Fahrzeugtyp existiert also vorzugsweise ein passender Adapter 19, wobei unterschiedliche Adapter 19 mit ein und demselben Prüfrad 3 verbindbar sind.

Das Prüfrad 3 kann nach der Montage des Adapters 19 auf dem Wellenabschnitt 5 montiert, insbesondere einfach auf diesen aufgeschoben werden. Vorzugsweise ist der Wellenabschnitt 5 des Adapters 19 derart an die Lagerhülse 23 angepasst, dass die beiden Elemente drehfest miteinander verbunden werden können, so dass also eine Relativbewegung zwischen ihnen aufgrund der Drehbewegung des Wellenabschnitts 5 vermieden wird. Auch eine axiale Verlagerung des Wellenabschnitts 5 gegenüber der Lagerhülse 23 kann durch den Einsatz entsprechender Mittel, insbesondere durch eine Wellenmutter oder dergleichen, vermieden werden.

Andererseits muss die Verbindung zwischen dem Wellenabschnitt 5 und der Lagerhülse 23 zur Demontage des Prüfrads 3 ohne erheblichen Kraftaufwand nach Beendigung des Testbetriebs durch einen Bediener lösbar sein. Hierzu bietet sich eine Spielpassung zwischen dem Wellenabschnitt 5 und der Lagerhülse 23 an, die ein Verkanten der beiden Elemente vermeidet. Das Prüfrad 3 kann dann relativ einfach von dem Wellenabschnitt 5 entfernt, insbesondere von diesem "abgezogen" werden.

Der Wellenabschnitt 5 weist einen Kopplungsbereich 25 auf, der beispielsweise in Form einer stirnseitigen Ausnehmung oder auch als (Wellen-)Verzahnung ausgebildet sein kann, und der zur Verbindung mit einer Antriebswelle 27 dient. Die Antriebswelle 27 kann beispielsweise flexibel ausgebildet sein oder als Kreuzgelenkwelle an dem Wellenabschnitt 5 anschließbar sein, derart, dass eine Drehverbindung zwischen einer in der Fig. 1 nicht gezeigten externen Antriebseinheit und dem Wellenabschnitt 5 herstellbar ist. Die Antriebswelle 27 ist folglich mit einer Antriebseinheit verbunden, über die der Wellenabschnitt 5 und eine zugehörige Fahrzeugantriebsachse um die Drehachse D mit einer vorbestimmten Drehgeschwindigkeit gedreht werden können. Alternativ oder zusätzlich kann Antriebswelle 27 auch mit einer Bremseinrichtung verbunden sein, die ein Abbremsen der jeweils zugeordneten Fahrzeugantriebsachse erlaubt.

In Fig. 1 ist noch eine Einrichtung 29 zur Verblockung der Drehlagerung zwischen dem Prüfrad 3 und dem Wellenabschnitt 5 andeutungsweise erkennbar. Durch die Einrichtung 29 kann eine Prüfrad-Anordnung in vorteilhafter Weise bereits außerhalb des Prüfstandes anstelle eines normalen Laufrads an das Fahrzeug montiert werden. Das Fahrzeug kann dann mittels des normalen Antriebs (Verbrennungsmotor) in den Prüfbereich gefahren werden, wobei ein Drehmoment von der Fahrzeugachse bzw. den Fahrzeugachsen (bei Vierrad-Antrieb) über die Verblockungseinrichtung auf das Prüfrad 3 übertragen wird. Durch die Verblockung der drehbaren Verbindung zwischen dem Prüfrad 3 und dem Wellenabschnitt 5 mittel der Einrichtung 29 kann das Fahrzeug also in vorteilhafter Weise selbstständig rangieren und in den Prüfstand hineinfahren. Im Prüfstand können die Prüfräder 3 dann mit Sicherheitsschlaufen am Boden fixiert werden und erst danach wird die Blockade der drehbaren Verbindung zwischen dem Prüfrad 3 und dem Wellenabschnitt 5 an jeder Prüfrad-Anordnung 1 gelöst.

Die Einrichtung 29 zur Verblockung der Drehlagerung zwischen dem Prüfrad 3 und dem Wellenabschnitt 5 kann auf vielfältige Art und Weise ausgebildet sein. Denkbar ist es beispielsweise, wie in der Fig. 1 angedeutet ist, ein stabförmiges Element 31 vorzusehen, welches einerseits mit dem Prüfrad 3 und andererseits mit dem Wellenabschnitt 5 über geeignete Befestigungsmittel 33 zur Übertragung eines Drehmoments drehfest verbunden ist. Das stabförmige Element 31 kann insbesondere in einer in dem Wellenabschnitt 5 radial verlaufenden Durchgangsbohrung angeordnet sein und anschließend mit den Befestigungsmitteln 33, insbesondere mittels Schrauben oder dergleichen an dem Prüfrad 3 und insbesondere an dem Radscheibeneinsatz 17 befestigt werden. Auf diese Weise wird eine Drehbewegung zwischen dem Prüfrad 3 und dem Wellenabschnitt 5 zuverlässig blockiert.

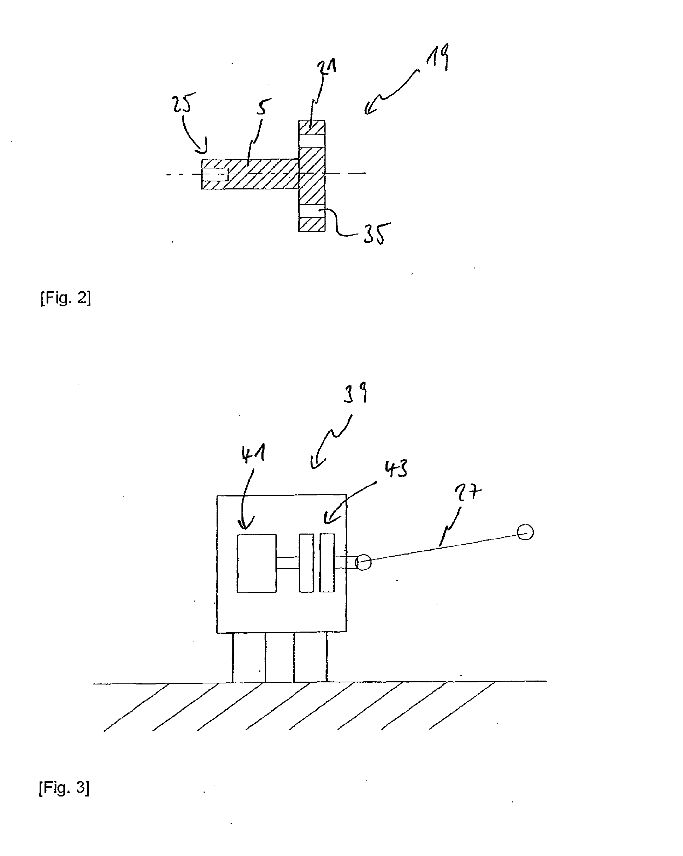

In der Fig. 2 ist eine schematische Schnittdarstellung des Adapters 19 mit dem Wellenabschnitt 5 gezeigt. Der Adapter 19 weist eine Adapterscheibe 21 auf, die Durchgangsbohrungen 35 zur Befestigung des Adapters 19 an der Radnabe 7 eines Kraftfahrzeugs mittels Schrauben aufweist. Es wird deutlich, dass der Kopplungsbereich 25 des Adapters 19 bzw. des Wellenabschnitts 5 nach der Ausführungsform gemäß Fig. 2 zum Anschluss an eine Antriebswelle 27 eine stirnseitige schlitz- oder kreuzschlitzförmige Ausnehmung zur Herstellung einer Drehverbindung zwischen dem Wellenabschnitt 5 und einer in Fig. 2 nicht gezeigten externen Antriebseinheit aufweist. Es versteht sich, dass der Kopplungsbereich 25 auch anders ausgebildet sein kann. Entscheidend ist, dass der Kopplungsbereich 25 so ausgebildet ist, dass ein Drehmoment von der Antriebswelle 27 zu dem Wellenabschnitt 5 übertragbar ist.

Fig. 3 zeigt eine schematische Darstellung einer Antriebseinheit 39, die mittels der Antriebswelle 27 mit einer Prüfrad-Anordnung 1 und insbesondere mit einem Wellenabschnitt 5 verbindbar ist. Die Antriebseinheit weist einen Elektromotor 41 und eine schaltbare Kupplung 43 auf, wobei der Elektromotor 41 vorzugsweise als Asynchronmaschine ausgebildet ist. Der Elektromotor 41 ist mit einem Computer verbunden und wird über diesen gesteuert bzw. geregelt. Durch die computergestützte Ansteuerung des Elektromotors ist es möglich, Fahrwiderstände des Fahrzeugs zu simulieren und korrekte Fahrzeugeigenschaften und andere Daten zu erfassen. Die Kopplung der Antriebswelle 27 mit der in Fig. 3 dargestellten Antriebseinheit ist rein beispielhaft. Es kann auch vorgesehen sein, die Prüfrad-Anordnung alternativ zu der Antriebseinheit oder zusätzlich zu dieser mit einer Bremseinrichtung verbunden ist.

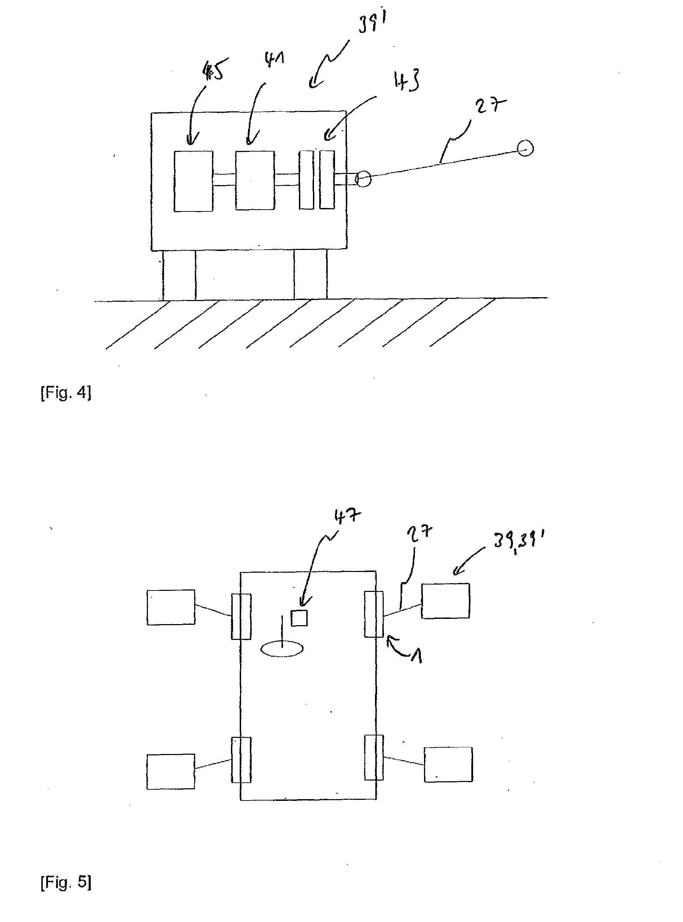

Die Fig. 4 zeigt eine weitere Ausführungsform einer externen Antriebseinheit 39', die wiederum einen Elektromotor 41 und eine schaltbare Kupplung 43 umfasst. Zusätzlich ist bei dieser Ausführungsform jedoch eine Bremseinrichtung, insbesondere eine Wirbelstrombremse 45 vorgesehen, die einen Bremsbetrieb ermöglicht, so dass also definierte Lasten simuliert werden können, die auf das Kraftfahrzeug wirken. Die Wirbelstrombremse 45 dient folglich zur Abbremsung des Elektromotors 41.

Zur Durchführung eines Testbetriebs werden die beiden einer Antriebsachse zugeordneten Laufräder eines Kraftfahrzeugs durch Prüfrad-Anordnungen 1 gemäß der Erfindung ersetzt. Bei einem Kraftfahrzeug mit Vierradantrieb kann auch vorgesehen sein, dass alle vier Laufräder des Kraftfahrzeugs jeweils durch eine Prüfrad-Anordnung 1 gemäß der Erfindung ersetzt werden, wie dies in Fig. 5 gezeigt ist.

Vorzugsweise ist jeder Prüfrad-Anordnung 1 eine Antriebseinheit 39 bzw. 39' zugeordnet, wobei eine Antriebseinheit jeweils über eine Antriebswelle 27 mit einem Wellenabschnitt 5 verbunden ist. Über die prüfstandsseitigen Elektromotoren 41 der Antriebseinheiten kann eine Prüfrad-Anordnung 1 bzw, ihr Wellenabschnitt 5 in Drehbewegung geschleppt oder gebremst werden. Fig. 4 zeigt wie gesagt eine fahrzeugexterne Antriebseinheit 39' mit einer schaltbaren Kupplung 43, die zwischen der Antriebswelle 27 und dem Elektromotor 41 vorgesehen ist, wobei der Elektromotor 41 für einen Schleppbetrieb des Fahrzeugs geeignet ist. Weiterhin weist die Antriebseinheit 39' eine Bremseinrichtung auf, die zur Erzeugung eines Bremsbetriebs vorgesehen ist. Auf diese Weise lässt sich mit vergleichsweise klein dimensionierten Elektromaschinen der Schleppbetrieb abdecken und die höhere Bremsleistung durch die Bremseinrichtung gewährleisten.

Es ist darüber hinaus denkbar, die Antriebseinheit 39 bzw. 39' mit einer Geräuschkapselung, also mit einem geräuschdämpfenden Gehäuse zu versehen, um störende Geräusche durch den Elektromotor 41 und/oder die Wirbelstrombremse 45 zu vermeiden, die den Testbetrieb beeinträchtigen können.

Die Prüfrad-Anordnung 1 ist bei Verwendung einer geeigneten Regelung auch zur Simulation von Kurvenfahrten geeignet. Die Räder lassen sich unabhängig vom Lastfall einschlagen und die äußeren Verbindungswellen, d.h. die Antriebswellen 27 machen dabei dieselben Bewegungen mit, wie die Antriebswellen eines mittels Frontantrieb angetriebenen Fahrzeugs. Die zu erzeugenden unterschiedlichen Raddrehzahlen lassen sich aus dem Einschlagwinkel der Lenkung und dem entsprechenden Kurvenradius berechnen. Im Bremsbetrieb ist es darüber hinaus denkbar, dass der Elektromotor 41 der Antriebseinheit 39 bzw. 39' als Generator benutzt wird und die gewonnene elektrische Energie in prüfstands- oder fahrzeugseitige Speicher zurückgespeist wird.

Anstelle des Elektromotors 41 kann die externe Antriebseinheit 39 bzw. 39' auch eine Hydraulikmaschine aufweisen, die prüfstandsseitig angesteuert wird und die dann sowohl für den Schleppbetrieb als auch für den Bremsbetrieb verwendet werden kann.

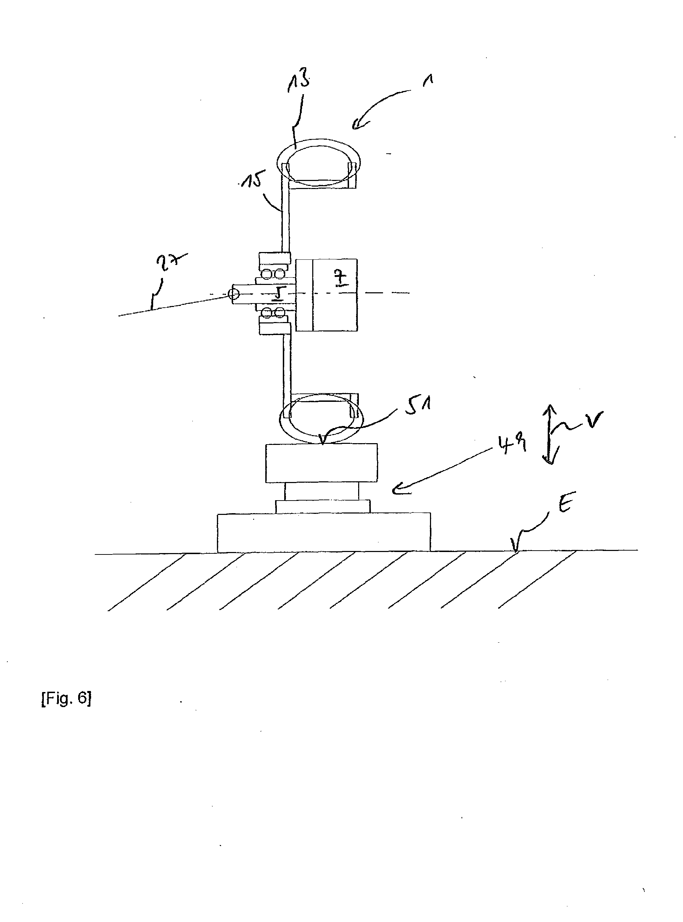

Fig. 6 zeigt eine schematische Schnittdarstellung einer Prüfrad-Anordnung 1, die mit einem Aktuator 49 zusammenwirkt. Der Aktuator ist so ausgebildet und angeordnet, dass er zur Simulation einer Fahrt auf einem unwegsamen Gelände, also zur Simulation einer "Schfechtweg-Fahrt" geeignet ist. Hierzu wirkt der Aktuator mit dem Prüfrad 3 derart zusammen, dass eine Kraft, und insbesondere impulsartige Kräfte über die Aufstandsfläche 51 des Reifens 13 eines Prüfrads 3 in das Fahrzeug einkoppelt werden. Die Kräfte werden folglich in einer vertikalen Richtung V in das Prüfrad 3 eingekoppelt, die senkrecht auf der Bodenebene E steht. Der Aktuator 49 kann elektrisch, hydraulisch oder pneumatisch ausgebildet sein. Durch eine Einwirkung des Aktuators 49 in der Richtung V, kann somit die Fahrt auf einer unebenen Straße simuliert werden. Je nach Grad der gewünschten Unebenheit kann der Aktuator 49 unterschiedlich starke Kräfte in die Prüfrad-Anordnung 1 einleiten. Es versteht sich, dass der Aktuator mit einer entsprechenden Steuerung zusammenwirkt, um eine gewünschte Kraftimpulsfolge in das Fahrzeug einzuleiten.

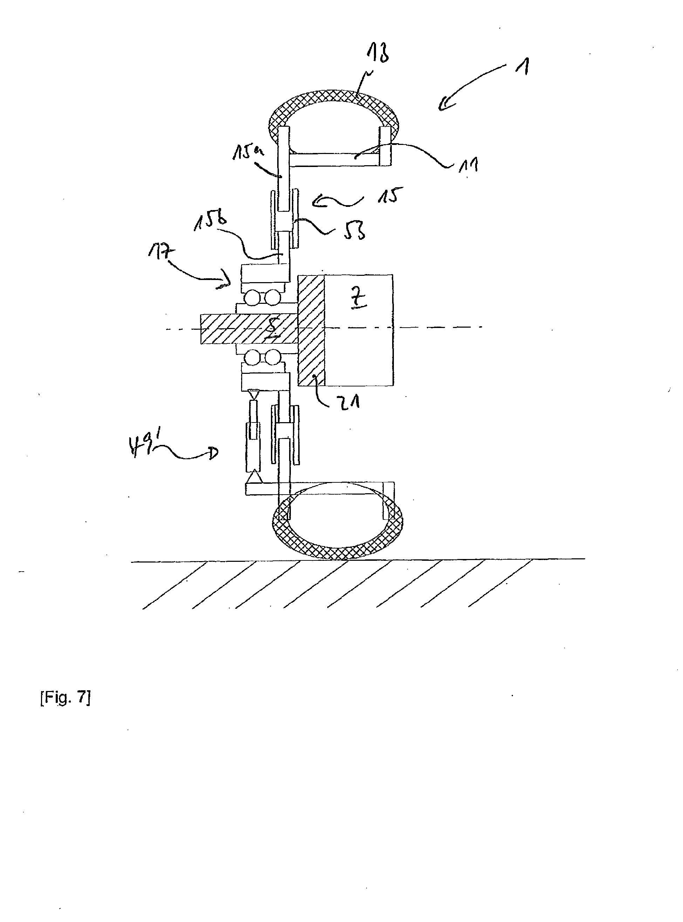

In der Fig. 7 ist eine weitere Ausführungsform einer Prüfrad-Anordnung 1 gezeigt, die einen Aktuator 49' zur Simulation einer "Schlechtweg-Fahrt" umfasst. Im Gegensatz zu der Ausführungsform gemäß Fig. 6 leitet der Aktuator 49' keine Kräfte in die Aufstandsfläche 51 des Reifens 13 ein, sondern der Aktuator 49' ist quasi in die Prüfrad-Anordnung 1 integriert und leitet Kräfte über einen Teil der Radscheibe 15 unmittelbar in den Wellenabschnitt 5 ein.

Gemäß der in Fig. 7 gezeigten Ausführungsform ist das Prüfrad 3 zweiteilig ausgebildet. Insbesondere weist die Radscheibe 15 zwei konzentrisch zueinander angeordnete Radscheibenteile 15a und 15b auf, wobei die beiden Radscheibenteile über ein ringförmiges Schienen- oder Führungselement 53 miteinander verbunden sind, derart, dass das radial innenliegende Radscheibenteil 15b relativ zu dem radial außenliegenden Radscheibenteil 15a verlagerbar ist, und zwar in einer Ebene, in der die Radscheibe 15 angeordnet ist. Die relative Verlagerung des inneren Radscheibenteils 15b zu dem äußeren Radscheibenteil 15a wird über den Aktuator 49' gesteuert, der einerseits an dem äußeren Radscheibenteil 15a und andererseits an dem radial innenliegenden Radscheibenteil 15b angreift und insbesondere zwischen diese beiden Teile angeordnet bzw. verspannt ist, wobei sich der Aktuator quasi in einer radialen Richtung des Prüfrads 3 erstreckt. Da das innenliegende Radscheibenteil 15b mit dem Wellenabschnitt 5 verbunden ist, bewirkt eine Verlagerung dieses Radscheibenteils 15b eine Verlagerung des Wellenabschnitts 5. Der Aktuator 49' wirkt derart, dass er eine Kraft ausschließlich in das innenliegende Radscheibenteil 15b einleitet unter Vermeidung einer Einwirkung auf den Reifen 13 und die Felge 11. Auf diese Teile wirken die Abstützkräfte des Aktuators. Durch die Einwirkung auf das innenliegende Radscheibenteil 15b wird wie gesagt eine Verlagerung des Wellenabschnitts 5 bewirkt, wodurch eine Simulation einer "Schlechtweg-Fahrt" möglich ist.

Es sei an dieser Stelle noch angemerkt, dass als Referenzmesspunkt für die sich im Fahrbetrieb einstellenden Beschleunigungen vorzugsweise die äußeren Enden der Achsschenkel oder damit starr verbundene Komponenten genutzt werden, um zur Schlechtweg-Simulation im Prüfstandsbetrieb authentische Kräfte bzw. Impulse einzukoppeln,

Sämtliche Aktuatoren der hier angesprochenen Art können wie gesagt als elektrodynamische Aktuatoren ausgeführt sein. Denkbar ist jedoch auch die Verwendung von hydraulischen oder pneumatischen Aktuatoren.

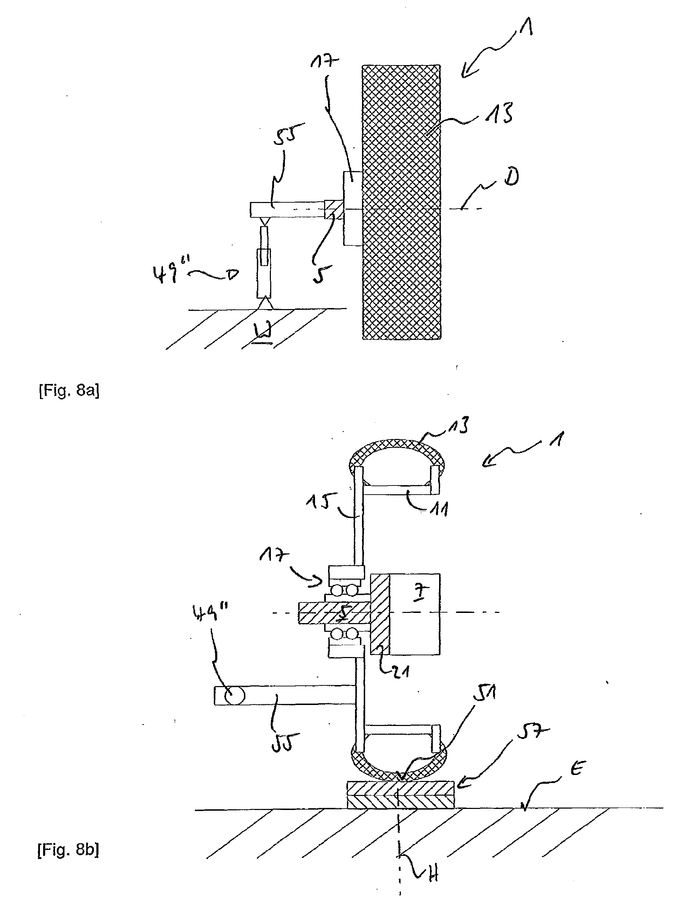

In den Fig. 8a und 8b ist eine weitere Ausführungsform der Erfindung dargestellt, bei der zur Einleitung bzw. Konditionierung von Lenkwiderstandsmomenten eine Anordnung genutzt wird, bei der unter den Reifenaufstandsflächen 51 der angetriebenen Laufräder drehbare Lager angeordnet sind. Weiterhin ist ein steuer- bzw. regelbarer Aktuator vorgesehen, der mit den mit der angetriebenen Achse eines Fahrzeugs verbundenen Prüfrad-Anordnungen 1 zusammenwirkt.

Fig. 8a zeigt eine Draufsicht auf eine Prüfrad-Anordnung und einen damit zusammenwirkenden Aktuator 49". Der Aktuator 49" stützt sich mit einem stirnseitigen Ende an einem Wandbereich W ab und mit seinem anderen stirnseitigen Ende an einem Auslegerelement 55, welches vorzugsweise mit dem Prüfrad 3 und insbesondere mit der Felge 11 verbunden ist. Der Wandbereich W kann Teil einer Aktuatoreinrichtung sein, die auch den Aktuator umfasst. Es ist denkbar, die Aktuatoreinrichtung verlagerbar, beispielsweise mit Rollen auszubilden und zum Testbetrieb im Bereich des Kraftfahrzeugs zu positionieren und dort zu fixieren. Insbesondere ist der Aktuator 49" an dem Wandbereich W derart angebracht, dass er im Wesentlichen lotrecht davon absteht, also im Wesentlichen parallel zum Boden angeordnet ist. Das Auslegerelement 55 erstreckt sich vorzugsweise parallel zu der Drehachse D der Prüfrad-Anordnung 1. Das Auslegerelement 55 kann lösbar mit dem Prüfrad 3, insbesondere mit der Felge 11 oder der Radscheibe 15 verbunden, beispielsweise verschraubt oder verschweißt sein. Zur Simulation einer Lenkbewegung leitet der Aktuator eine Kraft in das Auslegerelement 55 ein, derart, dass eine Drehung der Prüfrad-Anordnung 1 bewirkt wird.

Fig. 8b zeigt eine schematische Schnittdarstellung der Prüfrad-Anordnung gemäß Fig. 8a. Die Figur macht deutlich, dass zwischen der Bodenebene E und der Aufstandsfläche 51 des Reifens 13 ein drehbares Lager 57 angeordnet ist, welches über geeignete Mittel, insbesondere über einen Elektromotor um eine Drehachse H gedreht werden kann, die im Wesentlichen senkrecht auf der Bodenebene E steht. Bei einer Betätigung des Aktuators 49", der in der Fig. 8b senkrecht zu der Bildebene angeordnet ist, wird also eine Kraft auf das Prüfrad 3 ausgeübt, so dass sich die Prüfrad-Anordnung 1 zur Simulation einer Lenkbewegung um die Drehachse H dreht. Der Aktuator 49" kann wiederum elektrodynamisch, hydraulisch oder pneumatisch ausgeführt sein und die gewünschten Lenkwiderstandsmomente in Abhängigkeit von der Fahrgeschwindigkeit, dem Lenkwinkel und der Lenkwinkelanordnung in die Prüfrad-Anordnung 1 elnkoppeln.

Es sei an dieser Stelle erwähnt, dass die Prüfrad-Anordnung 1 mit einer hier nicht dargestellten äußeren Verkleidung, nämlich einer Radkappe versehen sein kann, wodurch der aerodynamische Widerstand der Prüfrad-Anordnung 1 optimiert wird, um insbesondere bei Windkanalmessungen unerwünschte Luftverwirbelungen zu vermeiden.

Die Fig. 8a und 8b machen deutlich, dass die Prüfrad-Anordnung 1 gemäß der Erfindung auch die Simulation von Lenkbewegungen zulässt. Diese werden durch die Antriebswellen 27 ausgeglichen und können somit kein Durchrutschen von Reifen auf einer Fahrbahn verursachen. Die Prüfrad-Anordnung 1 ist somit bei Verwendung einer geeigneten Regelung auch zur Simulation von Kurvenfahrten geeignet. Die Räder lassen sich unabhängig vom Lastfall einschlagen und die äußeren Antriebswellen machen dabei dieselben Bewegungen wie die Antriebswellen eines mittels eines Front- und/oder Heckantriebs angetriebenen Fahrzeugs. Die unterschiedlichen über die Antriebseinheiten einzustellenden Raddrehzahlen der Prüfrad-Anordnungen 1 und Insbesondere der Wellenabschnitte 5 ergeben sich aus dem Einschlagwinkel der Lenkung und dem entsprechenden Kurvenradius.

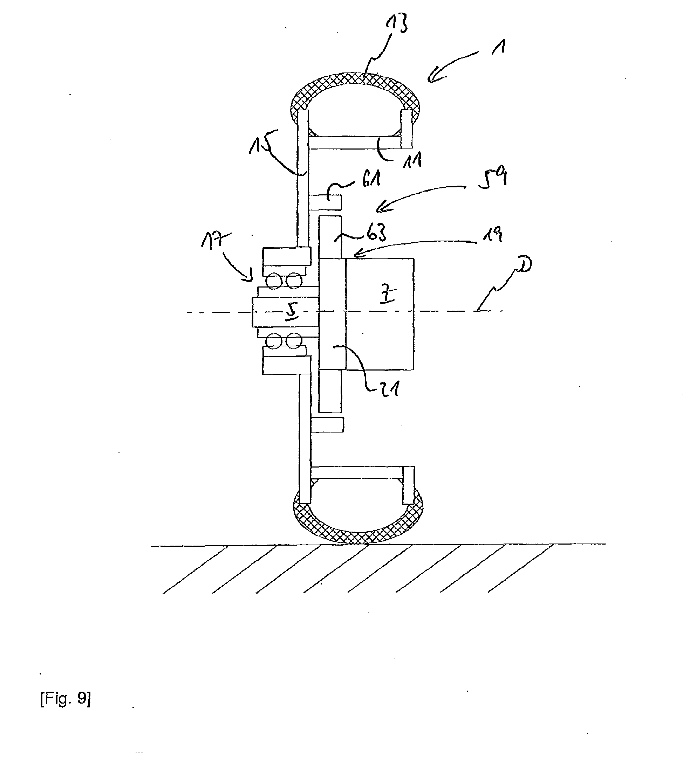

Die Fig. 9 zeigt einen Schnitt durch eine Prüfrad-Anordnung 1 gemäß einer weiteren Ausführungsform der Erfindung. Statt einer externen Antriebseinheit 39 bzw. 39' ist dort eine interne Antriebseinheit 59 vorgesehen, die vorzugsweise als Elektromotor ausgebildet ist und in die Prüfrad-Anordnung 1 integriert ist. Die Antriebseinrichtung 59 weist ein radial außenliegendes ringförmiges Element 61 auf, welches an dem Prüfrad 3 und insbesondere an der der Radnabe 7 zugewandten Seite der Radscheibe 15 angeordnet ist. Weiterhin umfasst die interne Antriebseinheit 59 ein radial innenliegendes ringförmiges Element 63, welches an dem Wellenabschnitt 5 oder wie in der Fig. 9 gezeigt, an dem Adapter 19 und insbesondere an der Adapterscheibe 21 angeordnet ist. Das radial außenliegende ringförmige Element 61 und das radial Innenliegende ringförmige Element 63 sind koaxial zueinander angeordnet und bilden einen Luftspalt zwischen sich aus. Sie wirken derart zusammen, dass je nach gewünschtem Einsatz der internen Antriebseinheit entweder das radial innenliegende Element 63 oder das radial außenliegende Element 61 den Rotor der internen Antriebseinheit 59 bilden.

Beispielsweise kann zum Antreiben des Wellenabschnitts 5 um die Drehachse D und damit der Fahrzeugachse das radial lnnenliegende Element 63 als Rotor wirken (Prüfstandsbetrieb), während das radial außenliegende Element 61 als Stator wirkt. Gleichzeitig ist es jedoch denkbar, die Interne Antriebseinheit 59 als Radnabenmotor derart zu betreiben, dass das radial außenliegende Element 61 als Rotor betreibbar ist, so dass sich also das Prüfrad 3 relativ zu dem stillstehenden Wellenabschnitt 5 dreht (Rangierbetrieb).

Die integrierte Antriebseinheit 59 umfasst außerdem in der Fig. 9 nicht gezeigte Anschlussmittel an eine Steuer- bzw. Regelschaltung und an eine Stromzufuhreinrichtung. Wie auch die externe Antriebseinrichtung 39, 39' ermöglicht die interne Antriebseinheit 59 für den Testbetrieb eine Drehung des Wellenabschnitts 5, der Radnabe 7 und damit der Fahrzeugachse um eine Drehachse D, wobei das Prüfrad 3 aufgrund der drehbaren Verbindung über das Lager 9 stillsteht. Besonders vorteilhaft ist es, dass das zu testende Fahrzeug seinen eigenen Elektromotor mit in den Prüfbereich bringt, wo dann höchstens noch die Ansteuerung bereitgestellt werden muss.

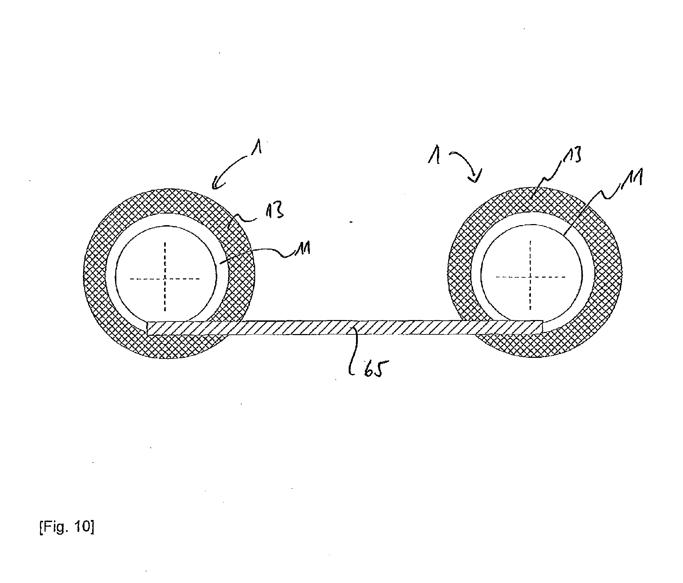

Fig. 10 zeigt zwei Prüfrad-Anordnungen 1, die auf einer Seite eines nicht dargestellten Fahrzeugs anstelle der normalen Laufräder mit dem Fahrzeug verbunden sind. Weiterhin ist eine Fixierungsvorrichtung 65 vorgesehen, die ein Wegrollen des Fahrzeugs bei einem Einsatz der Prüfrad-Anordnungen 1, insbesondere mit einer integrierten Antriebseinheit 59 vermeidet. Dies wird dadurch bewerkstelligt, dass das vordere und das hintere Rad wenigstens einer Fahrzeugseite durch die Fixierungsvorrichtung 65 miteinander verbunden sind. Insbesondere sind deren Prüfräder 3 bzw. die Felgen 11 mit der Fixierungsvorrichtung 65 verbunden, die vorzugsweise als stangenähnliches Element ausgebildet ist, welches einen Bodenabstand aufweist und längs des Fahrzeugs verläuft, derart, dass sich die Türen noch öffnen lassen. Es versteht sich, dass die Fixierungsvorrichtung 65 grundsätzlich auch beim Betrieb der Prüfrad-Anordnung 1 mittels der Antriebseinheit 39 oder 39' zum Einsatz kommen kann. Durch die Fixierungsvorrichtung 65 wird die benötigte Hardware der Prüfstandsperipherie auf ein Minimum reduziert. Insbesondere entfällt eine massive Armierung im Boden des Prüfbereichs, die üblicherweise zur Fixierung des Fahrzeugs benötigt wird. Selbst eine Havarie des Lagers der Prüfrad-Anordnung 1 wird insbesondere bei Verwendung der internen Antriebseinheit 59 sicher vermieden.

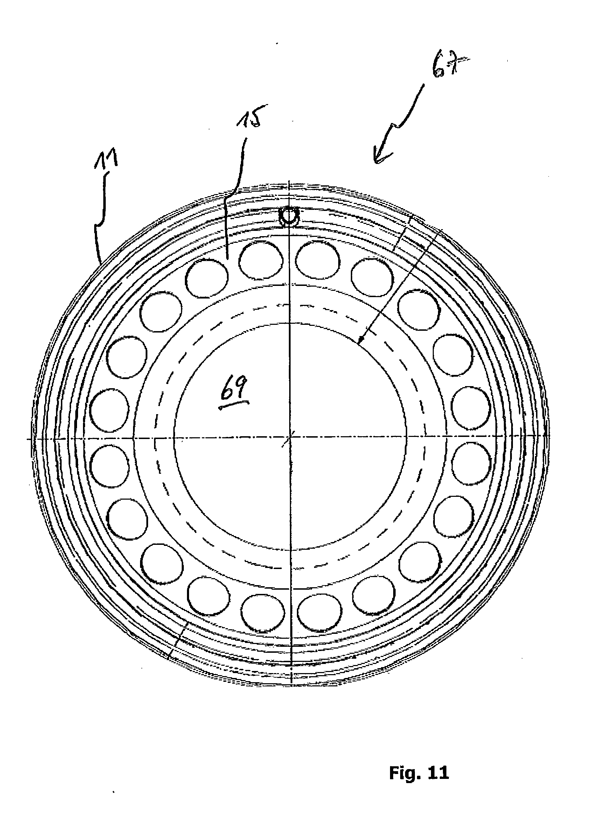

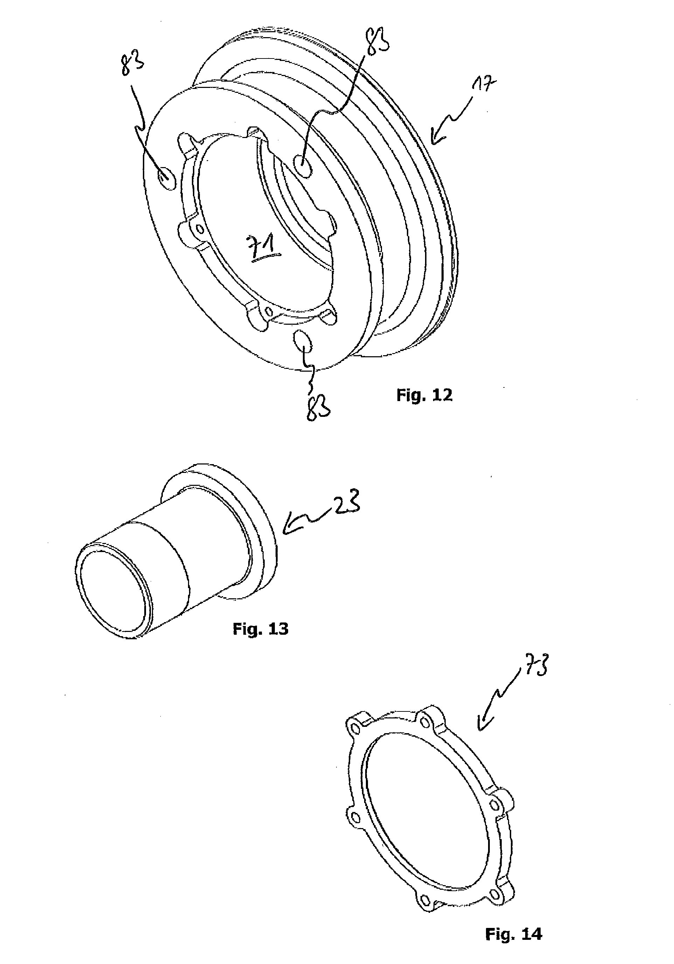

Im Folgenden wird anhand der Fig. 11 bis 20 ein konkretes Ausführungsbeispiel der Prüfrad-Anordnung 1 näher erläutert. Zur Herstellung der Prüfrad-Anordnung 1 kann ein herkömmliches Rad 67 dienen, welches eine Felge 11 und eine Radscheibe 15 sowie einen hier nicht gezeigten Reifen 13 aufweist. Die Fig. 11 macht deutlich, dass ein Teil der Radscheibe 15 derart entfernt, insbesondere ausgesägt, ausgestanzt oder ausgeschnitten Ist, dass die Radscheibe eine kreisförmige Öffnung 69 aufweist. In die kreisförmige Öffnung 69 ist ein in Fig. 12 gezeigter, im Wesentlichen kreisförmiger Radscheibeneinsatz 17 einsetzbar und mit der Radscheibe 15 verbindbar, insbesondere verschweißbar.

Der Radscheibeneinsatz 17 dient zur Aufnahme eines in der Figur nicht gezeigten Lagers, insbesondere eines Wälzlagers, welches mit seinem Inneren Lagerring auf einer in Fig. 13 gezeigten Lagerhülse 23 befestigbar, insbesondere aufgeschrumpft oder aufgeschweißt ist. Die Öffnung 71 des Radscheibeneinsatzes 17 dient zur Aufnahme des äußeren Lagerrings des mit der Lagerhülse 23 verbundenen Lagers 9, welches insbesondere in Fig. 1 gut erkennbar ist. Zur Vorspannung und Sicherung des Lagers in der Öffnung 71 kann ein Lagervorspannring 73, wie in Fig. 14 gezeigt, vorgesehen sein, der in eine entsprechend ausgebildete Ausnehmung an einer Stirnseite des Radscheibeneinsatzes 17 einfügbar ist.

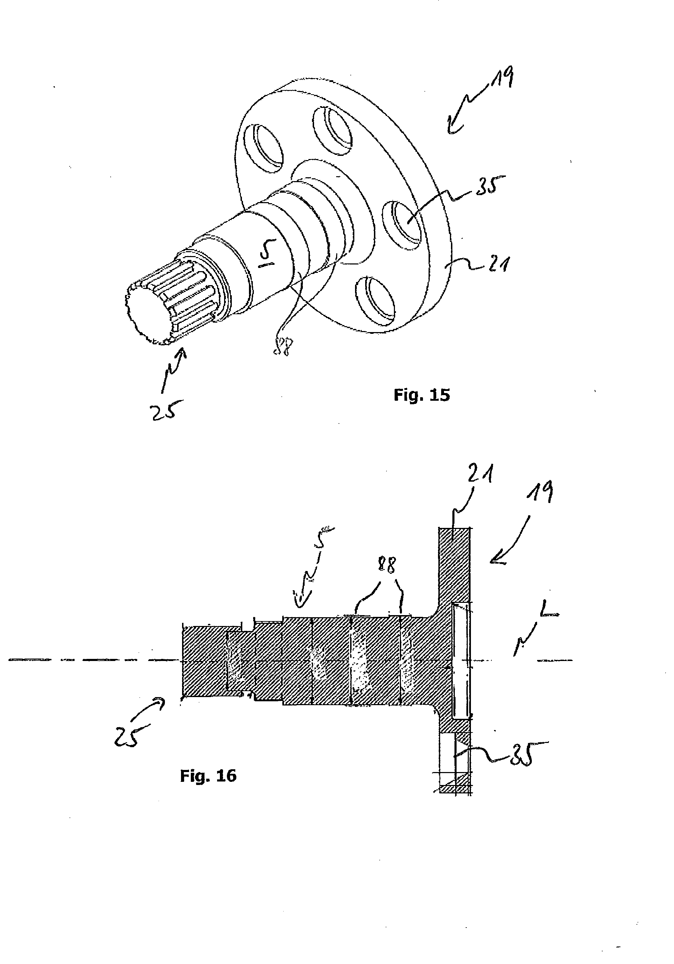

In der Fig. 15 ist eine perspektivische Darstellung des Adapters 19 mit dem Wellenabschnitt 5 und dem Kopplungsbereich 25 sowie mit der Adapterscheibe 21 dargestellt. Gut erkennbar sind in Fig. 15 die Durchgangsbohrungen 35 der Adapterscheibe 21, die zur Befestigung des Adapters 19 an einer in der Figur nicht gezeigten Radnabe 7 dient.

Die Fig. 15 macht weiterhin deutlich, dass der Kopplungsbereich 25 zur Verbindung des Wellenabschnitts 5 mit der Antriebswelle 27 eine (Wellen-)Verzahnung, insbesondere einen Keilwellenschliff zur Herstellung einer Drehverbindung zwischen dem Wellenabschnitt 5 und einer Antriebs- und/oder Bremseinheit aufweisen kann.

Sofern die Prüfrad-Anordnung 1 zur Vorbereitung einer Überprüfung eines Kraftfahrzeugs auf diverse Laufeigenschaften über wenigstens eine Radachse verwendet werden soll, wird also zunächst das normale Laufrad eines PKW demontiert und anschließend der Wellenabschnitt 5 an die Radnabe 7 des Kraftfahrzeugs angeschlossen. Unabhängig von der Montage des Wellenabschnitts 5 an der Radnabe 7 des Kraftfahrzeugs wird erst anschließend das Prüfrad 3 an dem Wellenabschnitt 5 befestigt, derart, dass das Prüfrad 3 frei drehbar auf dem Wellenabschnitt 5 gelagert ist. Zu diesem Zweck wird die Lagerhülse 23 samt Prüfrad 3 und dazwischen angeordnetem Drehlager auf den Wellenabschnitt 5 geschoben.

Um zu verhindern, dass die Lagerhülse 23 und der Wellenabschnitt 5 verkeilen, so dass die Verbindung zwischen diesen beiden Elementen also möglicherweise nicht mehr lösbar ist, ist es vorteilhaft, wenn zwischen der Lagerhülse 23 und dem Wellenabschnitt 5 eine Spielpassung realisiert wird. Dies wird gemäß dem vorliegenden Ausführungsbeispiel, wie in Fig. 16 gezeigt ist, derart realisiert, dass der Wellenabschnitt 5 in Richtung seiner Längsmittelachse L, d.h. also in axialer Richtung des Wellenabschnitts 5, abschnittsweise unterschiedliche Durchmesser aufweist, wobei der größte Durchmesser des Wellenabschnitts 5 vorzugsweise maximal so groß ist wie der kleinste Innendurchmesser der Lagerhülse 23. Die Zonen des größeren Wellendurchmessers sind in Fig. 15, 16 mit der Bezugsziffer 88 gekennzeichnet.

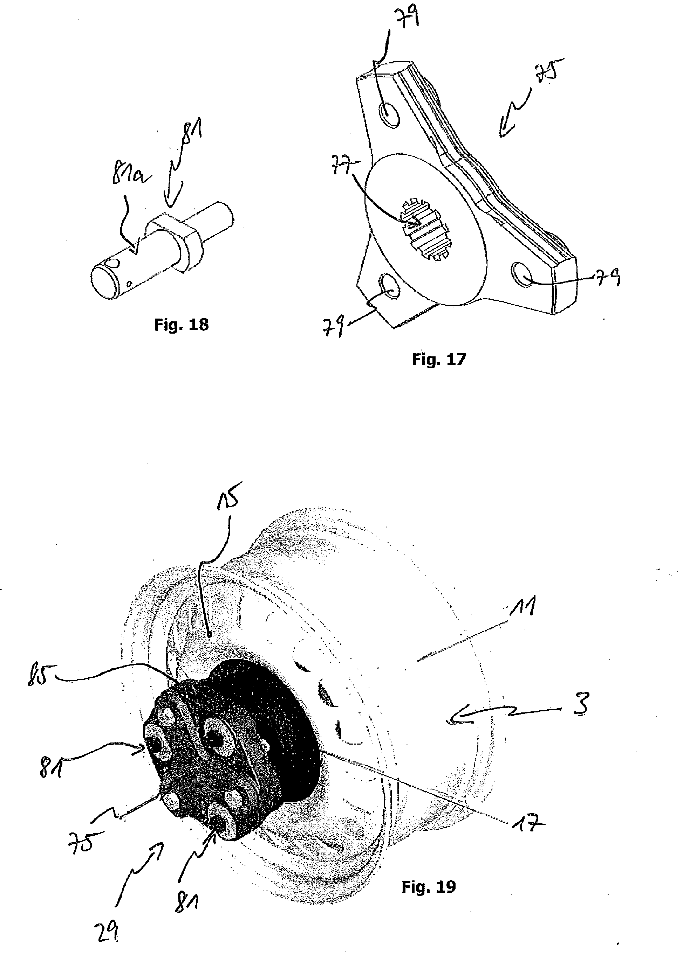

Im Folgenden wird auf ein Ausführungsbeispiel der Einrichtung 29 zur Verblockung der Drehlagerung zwischen dem Prüfrad 3 und dem Wellenabschnitt 5 eingegangen. Bei dem Ausführungsbeispiel gemäß der Fig. 17 bis 19 der Einrichtung zur Verblockung einer Drehlagerung zwischen dem Prüfrad 3 und dem Wellenabschnitt 5 umfasst diese einen dreiarmigen Flansch 75, der einerseits mit einem elastischen Zwischenelement, welches insbesondere durch eine Hardyscheibe gebildet wird, und andererseits mit dem Wellenabschnitt 5 drehfest verbunden ist. Zur drehfesten Verbindung mit dem Wellenabschnitt 5 weist der dreiarmige Flansch 75 eine Öffnung 77 auf, deren inneres Profil zur Aufnahme des äußeren Profils des Kopplungsbereichs 25 des Wellenabschnitts 5 derart ausgebildet ist, dass eine drehfeste Verbindung zwischen diesen beiden Elementen zustande kommt, wenn die Öffnung 77 des dreiarmigen Flansches 75 auf den Kopplungsbereich 25 des Wellenabschnitts 5 geschoben wird. Der Flansch und der Kopplungsbereich sind dann formschlüssig miteinander verbunden. Statt eines dreiarmigen Flansches 75 könnte auch ein zwei- oder fünfarmiger Flansch verwendet werden. Auch ein scheibenartiger Flansch wäre grundsätzlich denkbar.

Zur Verbindung des krallenartigen dreiarmigen Flansches 75 mit dem besagten flexiblen Zwischenelement ist in jedem Arm eine Durchgangsbohrung 79 vorgesehen, durch die entsprechende Verbindungselemente zur Verbindung des dreiarmigen Flansches 75 mit dem Zwischenelement führbar sind. Fig. 18 zeigt einen Steckbolzen 81, der in die in Fig. 12 gezeigte Öffnungen 83 des Radscheibeneinsatzes 17 derart einführbar ist, dass das Zwischenelement mit entsprechenden Öffnungen auf den Steckbolzenabschnitt 81a aufsteckbar ist und durch entsprechende Sicherungsmittel auf diesem gehalten werden kann.

Fig. 19 zeigt eine Prüfrad-Anordnung 1 mit einer Felge 11, einer Radscheibe 15, einem Radscheibeneinsatz 17 und einer aktivierten Einrichtung 29 zur Verblockung einer Drehlagerung zwischen dem Prüfrad 3 und des in der Fig. 19 nicht erkennbaren Wellenabschnitts 5. Es wird deutlich, dass das elastische Zwischenelement 85 vorzugsweise sechs Bohrungen umfasst, wobei drei der Bohrungen mit den Steckbolzen 81 gemäß Fig. 18 und folglich mit dem Prüfrad 3 verbunden sind, während die anderen drei Bohrungen mit dem dreiarmigen Flansch gemäß Fig. 17 derart verbunden sind, dass eine Drehlagerung zwischen dem Prüfrad 3 und dem Wellenabschnitt 5 blockiert wird. Das elastische Zwischenelement 85 vermeidet dabei eine Doppelzentrierung und sorgt für eine Dämpfung zwischen dem Wellenabschnitt 5 und dem Prüfrad 3. Die Fig. 19 macht noch deutlich, dass das elastische Zwischenelement zwischen dem Flansch, der im Übrigen mehr oder weniger als drei Arme aufweisen kann, und dem Prüfrad angeordnet ist.

An dieser Stelle sei noch darauf hingewiesen, dass das Prüfrad nahezu jede beliebige Größe aufweisen kann, besonders bevorzugt werden jedoch Stahlfelgen mit 16 Zoll verwendet, da diese an besonders vielen Fahrzeugtypen montierbar sind. Darüber hinaus kann im Übrigen der Radscheibeneinsatz 17 derart mit der Radscheibe 15 verbunden werden, dass er relativ zu dieser, beispielsweise über ein Gewinde oder dergleichen Mechanismus, in einer axialen Richtung des Rads verlagerbar ist.

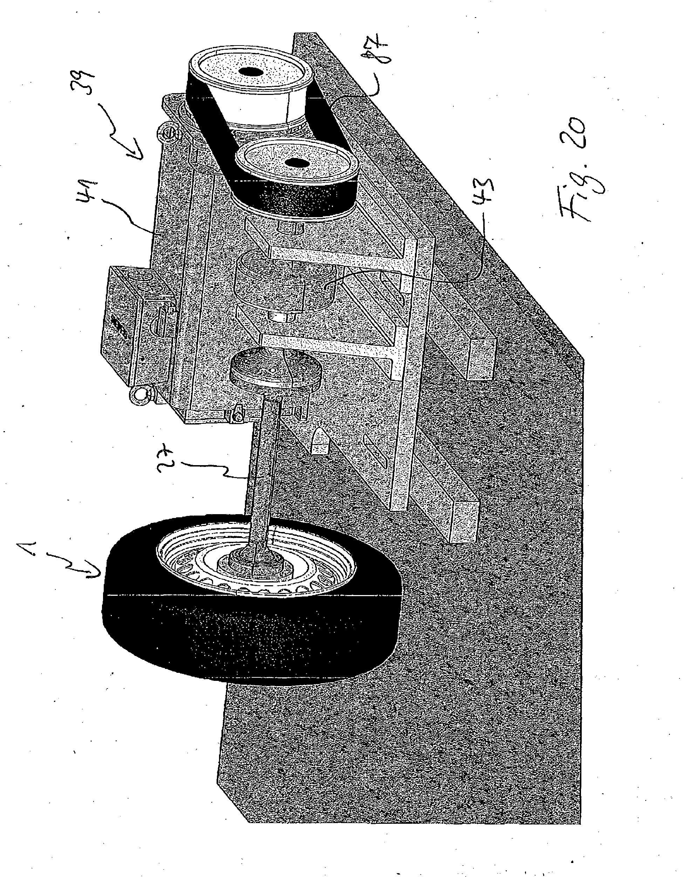

Fig. 20 zeigt noch eine perspektivische Darstellung einer beispielhaften Gesamtanordnung der Prüfrad-Anordnung 1 mit einer externen Antriebseinheit 39, wobei die Prüfrad-Anordnung 1 über die Antriebswelle 27 mit einer Kupplung 43, die insbesondere als Sicherheitskupplung ausgebildet ist, über einen Riemen 87 mit einem Elektromotor verbunden ist. Eine derartige Antriebseinheit ist dann vorzugsweise jeder Prüfrad-Anordnung 1 zugeordnet. Wie gesagt kann die Antriebseinheit mit einer Geräuschkapselung versehen sein, so dass Messungen der Fahrzeugakustik ohne störende Geräusche des Elektromotors vornehmbar sind. Ebenso kann ein bei einer realen Straßenfahrt aufgezeichnetes Fahrprofil auf dem Prüfstand nachgefahren werden. Dabei lassen sich alle Parameter wie Geschwindigkeit, Motorlast, Gangwahl, Lenkeinschlag, Schlechtweganregung etc. berücksichtigen.

Zur Realisierung eines Testbetriebs bzw. einer Fahrzeugerprobung ist vorzugsweise vorgesehen, dass eine prüfstandsseitige Regelungseinrichtung (nicht gezeigt) Zugriff auf sämtliche Mess- und Steuergrößen an dem Fahrzeug und an dem Prüfstand, d.h. an den Prüfrad-Anordnungen 1 und den Antriebs- bzw. Bremseinheiten hat. Vorzugsweise regelt diese Regelungseinrichtung konstante Motordrehzahlen. Denkbar ist es aber auch, dass in Abhängigkeit des jeweiligen eingelegten Ganges Fahrzeuggeschwindigkeiten mit einer definierten Last eingeregelt werden, die sich zwischen Vollast und Schleppbetrieb bewegt. Weiterhin kann die Regelungseinrichtung vorzugsweise definierte Last- und Drehzahlrampen zur Erstellung von Betriebskennfeldern einregeln und durchfahren. Darüber hinaus kann sie vorzugsweise zur Simulation von Kurvenfahrten aus dem Einschlagwinkel der Lenkung den entsprechenden Kurvenradius und die sich ergebenden Drehzahlunterschiede zwischen den linken und den rechten Rädern automatisch errechnen und die externen oder internen Antriebseinheiten entsprechend einregeln. Im Testbetrieb kann darüber hinaus vorgesehen sein, dass die prüfstandsseitige Regelungseinrichtung und ein Überwachungs- und Messsystem für dynamische Daten interaktiv kommunizieren und Daten bezüglich der Regelung, der Analyse und der Ablage dieser Daten in Echtzeit oder zumindest zeitnah austauschen. Bei den Daten der oben angesprochenen Art kann es sich beispielsweise um Temperaturen, Drücke, Schwingungen, Geräusche, Fahrzeug- und Motor-CAN-Busdaten usw. handeln.

Im Folgenden werden verschiedene Anwendungsbeispiele der Erfindung unter Bezugnahme auf unterschiedliche Testbetriebe näher erläutert. Die Ausgangssituation eines jeden Testbetriebs ist ein in einem Prüfbereich angeordnetes Kraftfahrzeug, dessen normale Laufräder durch zwei bzw. vier Prüfrad-Anordnungen 1 ersetzt wurden (je nachdem, ob das Fahrzeug einen Vorder-/Hinterradantrieb oder einen Vierradantrieb aufweist). Weiterhin ist jeder Prüfrad-Anordnung 1 eine Antriebs- und/oder Bremseinheit 39, 39', 59 zugeordnet.

Ein erster beispielhafter Testbetrieb betrifft einen geschleppten Betriebszustand des Fahrzeugtriebstrangs. Dabei wird der gesamte Triebstrang, d.h. also der Motor, das Getriebe und die Antriebswelle des Testfahrzeugs über die Elektromotoren und insbesondere die Asynchronmotoren der externen Antriebseinheiten angetrieben (geschleppt). Hierfür muss zunächst die Verblockung zwischen dem Prüfrad 3 und dem Wellenabschnitt 5 einer jeden Prüfrad-Anordnung 1 gelöst ist, sodass der Wellenabschnitt 5 relativ drehbar zu dem Prüfrad 3 gelagert ist. Der Verbrennungsmotor des Kraftfahrzeugs wird daraufhin zunächst im Leerlauf ohne eingelegten Gang betrieben. Danach kann die Fahrzeugkupplung geöffnet und ein Gang eingelegt werden. Wenn daraufhin die Fahrzeugkupplung geschlossen wird, dreht sich die Antriebsachse des Fahrzeugs. Da die Wellenabschnitte 5 über die Radnaben 7 mit der Antriebsachse verbunden sind, drehen sich auch die Wellenabschnitte 5 der Prüfrad-Anordnungen 1 mit der Drehzahl, wie sie sich durch den Motorleerlauf und die Übersetzung des Getriebes ergibt. Diese Radnabendrehzahl entspricht wiederum einer Fahrgeschwindigkeit. Aufgrund der Drehlagerung zwischen dem Wellenabschnitt 5 und dem Prüfrad 3 bleibt das Prüfrad stehen, während sich der Wellenabschnitt dreht.

Wenn nun die Drehzahl nach dem Öffnen der Fahrzeugkupplung beispielsweise 1000 Umdrehungen pro min (min⁻¹) beträgt und der Triebstrang von 1000 min⁻¹ bis 4000 min⁻¹ Motordrehzahl mit einer Beschleunigung von 100 min⁻¹/s "hochgeschleppt" werden soll, regelt die prüfstandsseitige Regelungseinrichtung an allen Antriebseinheiten 39 bzw. 39' die benötigte Schleppleistung als Funktion der Zeit ein. Das heißt also, dass die Antriebseinheiten und insbesondere deren Elektromotoren über die Antriebswellen 27 eine entsprechend höhere Drehzahl der Wellenabschnitte 5 und damit der Antriebswelle des Kraftfahrzeugs bewirken.

Durch den oben beschriebenen Testbetrieb wird ein geschleppter Betriebszustand des Kraftfahrzeugs entsprechend einer Bergabfahrt durch die Einwirkung auf die Wellenabschnitte 5 mittels der Antriebseinheiten simuliert. Folglich können reproduzierbare Drehzahlrampen ohne Verbrennungsgeräusche des Verbrennungsmotors gefahren werden. Weiterhin lassen sich hierbei heraushörbare Motorordnungen in ihrer akustisch kritischsten Ausprägung analysieren, da sie nicht von einem Verbrennungsgeräusch verdeckt werden. Beispielsweise lässt sich bei einem Motor mit den folgenden Konstruktionsdaten eine hörbare Ordnung auf die ursächliche Baugruppe zurückführen: Bei 23 Zähnen am Antriebsritzel für die Nockenwellenkette, 25 Zähnen für die Ölpumpenkette und einem Kältemittelverdichter, der 6 Zylinder, eine Übersetzung von 1,5 hat, kann eine neunte Motorordnung und deren Obertöne angeregt werden.

Ein weiterer beispielhafter Testbetrieb ist der gebremste Betrieb zur Fahrzeugerprobung. Insbesondere für die Analyse des Thermomanagements im Motorraum ist der reproduzierbare Lastbetrieb erforderlich. Zur Simulation einer sommerlichen Bergauffahrt mit Anhänger können diskrete Betriebspunkte oder auch Betriebszyklen definiert werden. Diese lassen sich über die Ansteuerung eines im Kraftfahrzeug platzierten Gaspedalroboters 47, wie er in Fig. 5 gezeigt ist, in Zusammenspiel mit den in die fahrzeugexterne Antriebseinheit 39' integrierten Wirbelstrombremsen 45 ansteuern.

Ein weiterer beispielhafter Testbetrieb ist eine simulierte Kurvenfahrt, wie sie beispielsweise bei der Entwicklung von Lenkhelfpumpen zum Einsatz kommt. Die Kurvenfahrt lässt sich durch die separate Drehzahlregelung der fahrzeugexternen Antriebseinheiten der beiden Fahrspuren einregeln. Aus dem Lenkeinschlagswinkel können der entsprechende Kurvenradius und die zugehörigen Drehzahldifferenzen der Räder errechnet werden. Das beschriebene Konzept der freilaufenden Wellenabschnitte 5 unterstützt simulierte Kurvenfahrten im geschleppten wie im gebremsten Motorbetrieb.

Eine weitere Anwendung ist die "Schlechtwegsimulation", also die Simulation des Fahrens mit dem Fahrzeug auf hügeligem oder zumindest unebenem Gelände. Die erfindungsgemäße Prüfrad-Anordnung erlaubt wie gesagt auch den gepulsten Betrieb zur Simulation von Schlechtweg-Fahrten mittels geeigneter Aktuatoren. Mit den von Flachbahnprüfständen bekannten Verfahren können Fahrbahnprofile definierter Rauhigkeit am Prüfstand reproduziert werden. Wesentlich für die Regelung sind die Interaktion von Fahrgeschwindigkeit, d.h. die Drehzahl des Wellenabschnitts 5 und die Häufigkeit der mittels der Aktuatoren eingekoppelten Impulse. Die Linearaktuatoren zur Einkopplung der Impulse können in die Verankerung der Radfixierung am Prüfstandsboden implementiert werden und als unterfluriger Aufbau oder in Form eines Podests ausgeführt werden, wie In der Fig. 6 dargestellt ist.

Insgesamt zeigt sich somit, dass die vorliegende Erfindung mit geringem baulichen Aufwand einen Fahrzeugtestbetrieb für viele verschiedene Fahrzeugtypen ermöglicht, der die typischen Anwendungsfälle eines Rollenprüfstands unterstützt. Insbesondere kann eine durch den Brems- und/oder Schleppbetrieb definierte Last bei veränderlicher Motordrehzahl und Fahrgeschwindigkeit realisiert werden.

Veränderungen der Geräuschentwicklung gegenüber dem Straßenbetrieb verursachen darüber hinaus keine zusätzlichen Geräusche - allenfalls entfallen typische Geräuschkomponenten einer realen Straßenfahrt, die jedoch elektronisch nachträglich hinzugefügt werden können. Für die Verwendung der Erfindung zur Messung der Fahrakustik eines Kraftfahrzeugs können einzelne oder auch mehrere Akustikkomponenten hinzugefügt werden. Sofern die Messung in einem Windkanal erfolgt, können beispielsweise Windgeräusche hinzugefügt werden, die ggf. gesondert feststellbar sind. Weiterhin können Motor- und Aggregatsgeräusche detektiert werden. Wie gesagt können diesen Geräuschen darüber hinaus real aufgezeichnete oder elektronisch erzeugte Abrollgeräusche der normalen Laufräder hinzugefügt werden. Die Hinzufügung von weiteren, hier nicht im Einzelnen aufgeführten Akustikkomponenten ist darüber hinaus denkbar. Auf diese Weise lässt sich mittels der stillstehenden Prüfräder im Prinzip ein vollständiges Fahrakustikprofil eines Kraftfahrzeugs erstellen.

Weiterhin ermöglichen die Prüfrad-Anordnungen gemäß der Erfindung ein einfaches Umrüsten eines Fahrzeugs mit den erfindungsgemäßen Prüfrad-Anordnungen und dadurch einen schnellen Fahrzeugwechsel im Prüfbereich, insbesondere in einem Windkanal oder dergleichen. Weiterhin ist ein gutmütiges und sicheres Verhalten des Fahrzeugs im Prüfbereich auch bei Lenkbewegungen sichergestellt.

### Bezugszeichenliste

- 1: Prüfrad-Anordnung
- 3: Prüfrad
- 5: Wellenabschnitt
- 7: Radnabe
- 9: (Wäfz-)Lager
- 11: Felge
- 13: Reifen
- 15: Radscheibe
- 15a: radial außenliegender Radscheibenabschnitt
- 15b: radial innenliegender Radscheibenabschnitt
- 17: Radscheibeneinsatz
- 19: Adapter
- 21: Adapterscheibe
- 23: Lagerhülse
- 25: Kupplungsbereich
- 27: Antriebswelle
- 29: Einrichtung zur Verblockung
- 31: stabförmiges Element
- 33: Befestigungsmittel
- 35: Durchgangsbohrung
- 37: Ausnehmung
- 39: Antriebseinheit
- 39': Antriebseinheit
- 41: Elektromotor
- 43: schaltbare Kupplung
- 45: Wirbelstrombremse
- 47: Gaspedalroboter
- 49: Aktuator
- 49': Aktuator
- 49": Aktuator
- 51: Reifenaufstandsfläche
- 53: ringförmiges Schienenelement
- 55: Auslegerelement
- 57: Lager
- 59: interne Antriebseinheit
- 61: radial außenliegendes Element
- 63: radial innenliegendes Element
- 65: Fixierungsvorrichtung
- 67: Rad
- 69: kreisförmige/zylindrische Öffnung
- 71: Öffnung
- 73: Lagervorspannring
- 75: dreiarmiger Flansch
- 77: Öffnung
- 79: Durchgangsbohrung
- 81: Steckbolzen
- 81a: Steckbolzenende
- 83: Öffnung
- 85: elastisches Zwischenelement
- 87: Riemen
- 88: Zonen größeren Durchmessers
- H: Drehachse
- D: Drehachse
- L: Längsmittelachse
- W: Wandbereich
- E: Bodenebene

## Patentansprüche

1. Prüfrad-Anordnung (1) zur Erprobung eines Kraftfahrzeugs bei stillstehenden Reifen, aufweisend einen an einer Radnabe (7) eines Kraftfahrzeugs anschließbaren Wellenabschnitt (5), auf dem ein Prüfrad (3) frei drehbar gelagert ist, sowie eine Einrichtung zur Verblockung der Drehlagerung zwischen dem Prüfrad (3) und dem Wellenabschnitt (5),
**dadurch gekennzeichnet,dass**
die Einrichtung zur Verblockung der Drehlagerung (29) zwischen dem Prüfrad (3) und dem Wellenabschnitt (5) ein elastisches Zwischenelement (85) und einen vorzugsweise dreiarmigen Flansch (75) aufweist, wobei das elastische Zwischenelement (85) drehfest mit dem Prüfrad (3) verbunden ist, und wobei der Flansch (75) einerseits mit dem elastischen Zwischenelement (85) und andererseits mit dem Wellenabschnitt (5) drehfest verbunden ist.

2. Prüfrad-Anordnung nach Anspruch 1,
**dadurch gekennzeichnet, dass**
das Prüfrad- (3) unabhängig von der Montage des Wellenabschnitts (5) an der Radnabe (7) auf diesem montierbar ist.

3. Prüfrad-Anordnung nach Anspruch 1 oder 2,
**dadurch gekennzeichnet,dass**
der Wellenabschnitt (5) Teil eines an der Radnabe (7) anschließbaren Adapters (19), insbesondere in Form einer Adapterscheibe (21), ist.

4. Prüfrad-Anordnung nach einem der vorhergehenden Ansprüche,
**dadurch gekennzeichnet, dass**
eine Antriebswelle (27), insbesondere eine flexible Antriebswelle oder eine Kreuzgelenkwelle an dem Wellenabschnitt (5) anschließbar ist, derart, dass eine Drehverbindung herstellbar ist.

5. Prüfrad-Anordnung nach einem der vorhergehenden Ansprüche,
**dadurch gekennzeichnet, dass**
der Wellenabschnitt (5) mit dem Prüfrad (3) über ein Wälzlager (9), insbesondere über ein Kugellager verbunden ist.

6. Prüfrad-Anordnung nach einem der vorhergehenden Ansprüche,
**dadurch gekennzeichnet, dass**
das Wälzlager (9) in einem die Radscheibe des Prüfrads (3) zumindest teilweise ersetzenden Radscheibeneinsatz (17) angeordnet ist.

7. Prüfrad-Anordnung nach Anspruch 6,
**dadurch gekennzeichnet,dass**
der Durchmesser des Wälzlagers (9) unabhängig vom Durchmesser der Radnabe (7) innerhalb des Radscheibeneinsatzes (17) frei wählbar ist.

8. Prüfrad-Anordnung nach Anspruch 6 oder 7,
**dadurch gekennzeichnet,dass**
der Radscheibeneinsatz (17) eine Lagerhülse (23) aufweist, deren Innendurchmesser an den Durchmesser des Wellenabschnitts (5) angepasst ist, derart, dass eine Spielpassung erzeugt wird.

9. Prüfrad-Anordnung nach einem der vorhergehenden Ansprüche,
**dadurch gekennzeichnet,dass**
sie mit wenigstens einem integrierten oder externen Aktuator (49, 49') zur Simulation einer Fahrt auf unebenem Gelände und/oder zur Simulation einer Lenkbewegung zusammenwirkt.

10. Prüfrad-Anordnung nach Anspruch 9,
**dadurch gekennzeichnet,dass**
ein in die Prüfrad-Anordnung integrierter Aktuator (49') derart angeordnet ist, dass er eine relative Verlagerung zweier konzentrisch zueinander angeordneter Radscheibenteile (15a, 15b) zueinander bewirken kann, derart, dass eine Kraft in den Wellenabschnitt (5) einleitbar ist.

11. Prüfrad-Anordnung nach Anspruch 9 oder 10,
**dadurch gekennzeichnet, dass**
der wenigstens eine Aktuator (49') elektrisch, hydraulisch oder pneumatisch ausgebildet ist.

12. Prüfrad-Anordnung nach einem der vorhergehenden Ansprüche,
**dadurch gekennzeichnet,dass**
sie eine integrierte Antriebseinheit (59) zum Durchführen eines Fahrbetriebs und/oder eines Testbetriebs umfasst.

## Claims

1. A test-wheel arrangement (1) for testing a motor vehicle with stationary tyres, comprising a shaft portion (5) capable of being connected to a wheel hub (7) of a motor vehicle onto which a test wheel (3) is mounted in a freely rotatable manner, and a device for locking the rotary bearing between the test wheel (3) and the shaft portion (5),
**characterised in that**
the device for locking the rotary bearing (29) between the test wheel (3) and the shaft portion (5) provides an elastic intermediate element (85) and a preferably three-armed flange (75), wherein the elastic intermediate element (85) is connected in a rotationally rigid manner to the test wheel (3), and wherein the flange (75) is connected in a rotationally rigid manner on one side to the elastic intermediate element (85) and on the other side to the shaft portion (5).

2. The test-wheel arrangement according to claim 1,
**characterised in that**
the test wheel (3) can be mounted, independently of the mounting of the shaft portion (5) on the wheel hub (7), on the latter.

3. The test-wheel arrangement according to claim 1 or 2,
**characterised in that**
the shaft portion (5) is a part of an adapter (19) capable of being connected to the wheel hub (7), especially in the form of an adapter disc (21).

4. The test-wheel arrangement according to any one of the preceding claims,
**characterised in that**
a drive shaft (27), especially a flexible drive shaft or a shaft with universal joint, can be connected to the shaft portion (5) in such a manner that a rotating connection can be manufactured.

5. The test-wheel arrangement according to any one of the preceding claims,
**characterised in that**
the shaft portion (5) is connected to the test wheel (3) via a roller bearing (9), especially via a ball bearing.

6. The test-wheel arrangement according to any one of the preceding claims,
**characterised in that**
the roller bearing (9) is arranged in a wheel-disc insert (17) at least partially replacing the wheel disc of the test wheel (3).

7. The test-wheel arrangement according to claim 6,
**characterised in that**
the diameter of the roller bearing (9) is freely selectable within the wheel-disc insert (17) independently of the diameter of the wheel hub (7).

8. The test-wheel arrangement according to claim 6 or 7,
**characterised in that**
the wheel-disc insert (17) provides a bearing sleeve (23) of which the interior diameter is matched to the diameter of the shaft portion (5) in such a manner that a clearance fit is created.

9. The test-wheel arrangement according to any one of the preceding claims,
**characterised in that**
it cooperates with at least one integrated or external actuator (49, 49') in order to simulate travel on uneven terrain and/or in order to simulate a steering movement.

10. The test-wheel arrangement according to claim 9,
**characterised in that**
an actuator (49') integrated in the test-wheel arrangement is arranged in such a manner that it can achieve a relative displacement relative to one another of two wheel-disc parts (15a, 15b) arranged concentrically relative to one another in such a manner that a force can be introduced into the shaft portion (5).

11. The test-wheel arrangement according to claim 9 or 10,
**characterised in that**
the at least one actuator (49') is embodied in an electrical, hydraulic or pneumatic manner.

12. The test-wheel arrangement according to any one of the preceding claims,
**characterised in that**
it comprises an integrated drive unit (59) for the implementation of a drive mode and/or a test mode.

## Revendications

1. Ensemble de roue d'essai (1) servant à effectuer des essais sur un véhicule automobile lorsque les pneus sont immobiles, présentant une section d'arbre (5) pouvant être raccordée à un moyeu de roue (7) d'un véhicule automobile, sur laquelle est installée une roue d'essai (3) de manière à pouvoir tourner librement, et également un dispositif servant à bloquer le support de rotation entre la roue d'essai (3) et la section d'arbre (5),
**caractérisé en ce**
**que** le dispositif servant à bloquer le support de rotation (29) entre la roue d'essai (3) et la section d'arbre (5) présente un élément intermédiaire (85) élastique et une bride (75) de préférence à trois bras, l'élément intermédiaire (85) élastique étant relié de manière solidaire en rotation à la roue d'essai (3), et la bride (75) étant reliée de manière solidaire en rotation d'une part à l'élément intermédiaire (85) élastique et d'autre part à la section d'arbre (5).

2. Ensemble de roue d'essai selon la revendication 1,
**caractérisé en ce**
**que** la roue d'essai (3) peut être montée sur la section d'arbre (5) indépendamment du montage de celle-ci sur le moyeu de roue (7).

3. Ensemble de roue d'essai selon les revendications 1 ou 2,
**caractérisé en ce**
**que** la section d'arbre (5) fait partie d'un adaptateur (19) pouvant être raccordé au moyeu de roue (7), se présentant en particulier sous la forme d'un disque adaptateur (21).

4. Ensemble de roue d'essai selon l'une quelconque des revendications précédentes,
**caractérisé en ce**
**que** l'arbre d'entraînement (27), en particulier un arbre d'entraînement flexible ou un arbre à joint universel, peut être raccordé à la section d'arbre (5) de telle manière qu'il est possible d'établir une liaison par rotation.

5. Ensemble de roue d'essai selon l'une quelconque des revendications précédentes,
**caractérisé en ce**
**que** la section d'arbre (5) est reliée à la roue d'essai (3) par l'intermédiaire d'un palier à roulement (9), en particulier par l'intermédiaire d'un roulement à billes.

6. Ensemble de roue d'essai selon l'une quelconque des revendications précédentes,
**caractérisé en ce**
**que** le palier à roulement (9) est disposé dans un insert de disque de roue (17) remplaçant au moins en partie le disque de roue de la roue d'essai (3).

7. Ensemble de roue d'essai selon la revendication 6,
**caractérisé en ce**
**que** le diamètre du palier à roulement (9) peut être choisi librement indépendamment du diamètre du moyeu de roue (7) à l'intérieur de l'insert de disque de roue (17).

8. Ensemble de roue d'essai selon la revendication 6 ou 7,
**caractérisé en ce**
**que** l'insert de disque de roue (17) présente une douille palier (23) dont le diamètre intérieur est adapté au diamètre de la section d'arbre (5) de manière à obtenir une adaptation du jeu.

9. Ensemble de roue d'essai selon l'une quelconque des revendications précédentes,
**caractérisé en ce**
**qu'**il coopère avec au moins un actionneur (49, 49') intégré ou externe servant à simuler un trajet sur un terrain accidenté et/ou servant à simuler un mouvement de direction.

10. Ensemble de roue d'essai selon la revendication 9,
**caractérisé en ce**
**qu'**un actionneur (49') intégré dans l'ensemble de roue d'essai est disposé de telle manière qu'il peut entraîner un déplacement relatif l'une vers l'autre de deux parties de disque de roue (15a, 15b) disposées de manière concentrique l'une par rapport à l'autre de telle manière qu'il est possible d'introduire une force dans la section d'arbre (5).

11. Ensemble de roue d'essai selon la revendication 9 ou 10,
**caractérisé en ce**
**que** le au moins un actionneur (49') est réalisé de manière électrique, hydraulique ou pneumatique.

12. Ensemble de roue d'essai selon l'une quelconque des revendications précédentes,
**caractérisé en ce**
**qu'**il comprend une unité d'entraînement (59) intégrée permettant d'effectuer un roulement et/ou un test.
